# EUROPEAN PATENT APPLICATION

(11) **EP 1 901 557 A1**
(43) Date of publication of application: **19.03.2008**
(21) Application number: 06715517.6
(22) Date of filing: 10.03.2006
(51) Int. Cl.: H04N 7/173

(54) **CONTENTS REPRODUCTION DEVICE, METHOD FOR PROVIDING SERVICE-RELATED INFORMATION, SERVICE-RELATED INFORMATION PROVIDING DEVICE, AND SERVICE PROVIDING SYSTEM**

(30) Priority: 31.05.2005 JP 2005158463; 20.09.2005 JP 2005271894
(71) Applicant: Sharp Kabushiki Kaisha, Osaka-shi, Osaka 545-8522 (JP)
(72) Inventor: SATO, Koji, Chiba 261-0013 (JP)
(74) Representative: Müller, Frithjof E.
(86) International application number: PCT/JP2006/304697
(87) International publication number: WO 2006/129404

(57) **Abstract**

A content reproducing apparatus for reproducing contents provided by a content providing server, notifying a user of information related to services including pay broadcast and allowing the user to readily confirm the service contents, includes: a content processing unit 216 for reproducing content; a communication unit 210 for providing communication using a prescribed network; and a template processing unit 222 receiving service-related information including service identifying information indicating a content service and prescribed information related to the content service identified by the service identifying information from the network through the communication unit 210, processing the service-related information, and controlling the content processing unit 216 such that the content indicated by the received service identifying information is processed using the service-related information.

## Description

### Technical Field

The present invention relates to an information providing service system realized in coordination with broadcasting service, utilizing a network. Specifically, the present invention relates to an information providing service system that can timely provide a user of the broadcasting service with pieces of information related to the broadcasting service and allow the user of the broadcasting service to access such a service without requiring any troublesome procedures.

### Background Art

Recent development in network technologies and increased number of terminals connected to the Internet have lead to ever increasing number of network users. Whereas the conventional broadcasting service is basically a one-to-many service, network communication is basically one-to-one. This may be the reason why a service unavailable through the broadcasting service, such as an e-mail service, has been widely and drastically spreading.

The conventional broadcasting service, however, still provides a method of transmitting information as it transmits programs to a large number of viewers by radio wave, which method is difficult to implement by the Internet. Particularly, it is often the case that broadcasting wave can be received even in districts where infrastructure for the Internet is hardly available. Therefore, the broadcasting service will continue to exist, providing services of different sort from the ones on the Internet.

Satellite broadcast and cable television (hereinafter, "television" will be simply denoted by "TV") have come to be so popular these days that the number of channels viewable by the broadcasting service increased tremendously. Larger number of channels is preferable as it provides various and many broadcasting services available to users. TV receivers are diffused to each and every household, and two or more TV receivers are often found in a house. An environment has been created that allows even portable information equipment such as a portable telephone to receive digital broadcast from a broadcasting satellite. It will not be long before such an environment for portable equipment is realized in which he or she enjoys his or her favorite programs by himself or herself.

It becomes more and more difficult, however, to find a program of interest among ever-increasing channels and ever-increasing programs of late. In the old days, one could easily find a program of interest by checking a TV page in the newspaper. Nowadays, the TV page in the newspaper lists only a few of the formidable number of programs available. Therefore, it is difficult to find a program that one wants to watch from the newspaper.

One solution to this problem is an electronic program guide (EPG). The EPG includes pieces of information related to programs to be broadcasted by each broadcasting station, and is prepared as electronic information in advance. The EPG includes scheduled time of broadcast, summary of the program, information of cast, producers, related keywords of the program and so on. The EPG may be transmitted to and displayed on a TV receiver together with broadcasting wave, or stored in a web server on the Internet to be viewable. The user obtains an EPG and can search for a program having favorite attributes, using a TV receiver or a personal computer. Different from a program table in a newspaper, the EPG has virtually no size-limit, and is machine-readable. Therefore, the EPG has far wider scope of application than the program table in a newspaper.

Program search using the EPG, however, ultimately requires people to check the EPG to find his or her favorite programs. The task of finding an attracting program among a number of similar programs viewed by use of the EPG data is particularly troublesome for a person. As a result, it is not always desirable to search for a program by checking the EPG. Further, in a small apparatus having only a limited display area such as a portable telephone and a PDA (Personal Digital Assistant), the amount of information that can be displayed at one time is considerably small. In order to comprehend all the pieces of program information before searching for a program people want to watch, display operation must be repeated many times, which means the user must endure much trouble.

Rather, most of the users will continue "zapping " operation, to jump from channel to channel by use of the remote until he or she happens to find a program that seems interesting.
Patent Document 1: Japanese Patent Laying-Open No. 2002-140636
Patent Document 2: Japanese Patent Laying-Open No. H11-298877

### Disclosure of the Invention

### Problems to be Solved by the Invention

When a new program starts, or when broadcast of a particularly hot program is drawing near, it is desirable to let as many users as possible know the broadcast of the program. Producers, sponsors, or those who involved in such programs may have strong desire to do so. Sometimes, one may wish to give information as to the program to like-minded persons, simply for fun or out of kindness.

In view of the foregoing, it may be possible to transmit an announcement to the user by an e-mail, for giving information. The user, receiving the notification, might possibly act to view the program, based on the information described in the e-mail, if he or she were interested in the program.

Some programs or broadcasting stations restrict access by only registered subscribers. For instance, a pay-TV station broadcasts scrambled airwaves, and a program from that station can be viewed only by a TV receiver with a decoder that has a prescribed key. Even if an announcement is sent to the user, the content would not be viewed by the user unless the user bothers himself or herself to register for the service, and in most cases, the user does not go to the trouble to register. When a user happens to come to such a program or channel during zapping, the user cannot know the content as the waves are scrambled. It is not likely that the user applies for subscription of the service to view the program that was jumped during zapping.

Therefore, there is a need for an information providing service that can provide users with information related to the content offered by the broadcasting service and allows the user to easily confirm the content of even paid broadcasts. It is advantageous for the user and desirable for a service provider that the information providing service allows provision of information not only from the provider of the broadcasting service but also from a third party. A content reproducing apparatus supporting such information providing service is also needed.

Therefore, an object of the present invention is to provide a method of providing service-related information to provide a user with information related to broadcasting service (service-related information) necessary to receive content service such as the broadcasting service, so as to enable the user to easily confirm the service content, a content reproducing apparatus therefor, and an information providing apparatus therefor.

Another object of the present invention is to provide a method of providing service-related information to provide a user with service-related information so as to enable the user to easily confirm the content of services including even the scrambled services, a content reproducing apparatus therefor, and an information providing apparatus therefor.

A still further object of the present invention is to provide a method of providing service-related information to provide a user with service-related information so as to enable the user to easily confirm the content of services including the scrambled services and to enable the user to easily sign up regular subscription of the corresponding service, a content reproducing apparatus therefor, and an information providing apparatus therefor.

### [Means for Solving the Problems]

A content reproducing apparatus in accordance with the first aspect of the present invention, for reproducing content provided by a content providing server, includes: a content processing means for applying a prescribed process to content; a communication means for providing communication using a prescribed network; and a service-related information processing means for receiving and processing service-related information including service identifying information identifying a content service and prescribed information related to the content service identified by the service identifying information from the prescribed network through the communication means, and for controlling the content processing means such that the content processing means processes the content identified by the service identifying information using the service-related information.

When a piece of service-related information is received from the network, content provided by the content providing server can be identified by a piece of service identifying information included in the piece of service-related information. Further, the content is processed by the content processing means, using the service-related information. The service-related information applied from a different source includes information for processing the content. Therefore, by the service providing the service-related information as such, the user comes to have a chance to see the content that might be different from his/her ordinary choice.

Preferably, the content provided by the content providing server may require prescribed key information for processing. The content reproducing apparatus further includes a service management means for managing a set of the service identifying information of the content service and the key information. The content processing means includes means for obtaining, when the service identifying information is applied, the corresponding key information from the service management means for processing the content designated by the service identifying information. The service-related information processing means includes means for determining whether the key information for processing the content identified by the service identifying information received by the service-related information receiving means exists in the service management means or not, and key information obtaining means responsive to a determination by the determining means that the key information does not exist in the service management means, for obtaining the key information corresponding to the content service identified by the service identifying information using the service-related information, and applying it to the service management means. By this arrangement, processing of the content of which key information does not exist in the service management means becomes possible.

If key information is necessary, in order to process the content provided by the content providing server indicated by the received service identifying information, and if the service management means does not have the key information, the necessary key information is obtained using the service-related information. As a result, it becomes possible to process the content provided by the content providing server of which key information does not exist in the service management means. Therefore, even for such content that requires key information for processing, the key information can be obtained and necessity thereof can be confirmed by the user of the content reproducing apparatus, and presence of such content can be known to many users, as the processing of key information and the processing related to content reproduction can be executed separately. A user who does not receive the service-related information cannot process the content, and therefore, profits of the operator of content providing service are not undermined. On the other hand, as for the content service of which key information has been already held by the service management means, the key for reproducing the content will not be newly obtained, and therefore, there will be no access to the content providing server.

More preferably, the prescribed information includes access destination information indicating an access destination to obtain the key information required for processing the content provided by the content providing server identified by the service identifying information. The key information obtaining means includes means responsive to a determination by the determining means that the key information does not exist in the service management means, for obtaining the key information corresponding to the content service identified by the service identifying information by transmitting the service identifying information included in the service-related information to the access destination indicated by the access destination information included in the service-related information through the communication means.

Access destination information for obtaining the key information necessary to process the content is included in the service-related information. The content reproducing apparatus can obtain the key information from an appropriate access destination, using the information. The user who does not receive the service-related information cannot know the access destination, and hence cannot process the content. Therefore, profits of the operator of content providing service are not undermined.

More preferably, the prescribed information further includes authentication information for authentication at the time of an access to the access destination. The means for obtaining key information includes means responsive to a determination by the determining means that the key information does not exist in the service management means, for obtaining the key information corresponding to the content service identified by the service identifying information by transmitting the service identifying information included in the service-related information and the authentication information to the access destination indicated by the access destination information included in the service-related information through the communication means.

Authentication information to access the access destination to obtain the key information required for processing content is included in the service-related information. The content reproducing apparatus can obtain the key information after authentication using the authentication information. The user who does not receive the service-related information cannot know the access destination information, and hence cannot obtain effective authentication information. Therefore, the user cannot obtain the key information. Without key information, the user who does not receive the service-related information cannot process the content. Thus, a process becomes possible that keeps the content confidential so as not to undermine the profits of the operator of content providing service, gives desiring users information of the desired content, and allows direct processing of the content.

The prescribed information may further include service access destination information indicating a service access destination to be accessed to receive the content service identified by the service identifying information. In that case, the service-related information processing means may further include means for applying the service access destination information to the means for processing. The means for processing may include means for processing the content from the content providing server indicated by the service access destination information applied by the means for applying, using the key information obtained by the means for obtaining.

As the service access destination is explicitly indicated, it becomes possible, by way of example, to provide one same content service distributed through a plurality of servers, in view of dispersing services. Thus, concentration to the content can be avoided, and smooth confirmation of the content by the user is possible.

Preferably, the prescribed information further includes a key retrieving command string to be applied to the access destination when the key information is to be obtained. The means for obtaining key information includes means responsive to a determination by the determining means that the key information does not exist in the service management means, for receiving the key information corresponding to the content service identified by the service identifying information from the access destination by transmitting the service identifying information included in the service-related information and the key retrieving command string to the access destination indicated by the access destination information included in the service-related information through the communication means.

In the service management information, a string of commands for obtaining the key, to be applied to the address destination at the time of obtaining the key information is included. The content reproducing apparatus receiving the service management information can reliably obtain the key information from the access destination, using the string of commands for obtaining the key. The content reproducing apparatus that does not receive the service management information cannot obtain the string of commands for obtaining the key, and therefore, even if the access destination were known, it is difficult to get the key information. As a result, a process becomes possible that keeps the content confidential so as not to undermine the profits of the operator of content providing service, gives desiring users information of the desired content, and allows direct processing of the content.

More preferably, the prescribed information includes key information required for processing the content provided by the content providing server identified by the service identifying information, and the key information obtaining means includes means responsive to a determination by the means for determining that the key information does not exist in the service management means, for obtaining the key information included in the service-related information and applying the same to the service management means.

When the key information does not exist in the service management means, the key information obtaining means obtains the key information included in the service-related information, and applies the same to the service management means. By this configuration, even when a piece of service-related information without key information is received, the content provided by the server can be reproduced.

More preferably, the content reproducing apparatus further includes means for managing validity period of the key information obtained by the key information obtaining means and for invalidating the key information in response to expiration of the validity period.

After expiration of the validity period, the key information is invalid, and therefore, the content cannot further be processed. It is possible, however, to check and see what the content are like, within the validity period of the key information. A user who wants to process the content will go through due formalities to obtain the key information. This is advantageous both to the operator of the content service and to the user.

The prescribed information may include auxiliary content related to the content provided by the content providing server identified by the service identifying information. The content reproducing apparatus may further include: means responsive to reception by the service-related information processing means of the service-related information, for presenting the auxiliary content to a user; and means for receiving a user instruction as to whether the content provided by the content providing server identified by the service identifying information is to be processed or not. The service-related information processing means may include means for controlling the content processing means such that in response to reception by the receiving means of an instruction from the user to process the content, the content identified by the service identifying information received by the service-related information processing means is processed, using the service-related information received by the service-related information processing means.

Auxiliary content included in the service-related information is presented to the user. The user can determine and instruct whether the presented auxiliary content should be processed or not. As a result, when the content has already been processed, for example, it is possible for the user to determine whether to switch to processing of new content or to continue processing of the content that is being processed at present. The content being processed would not be changed abruptly for the user, so that the user can confirm the content at any time, and if the user happens to be interested in the new content given by the newly received service-related information, he or she has a chance to process the new content.

Preferably, the presenting means includes means, responsive to reception of a plurality of pieces of service-related information related to the content service by the service-related information processing means, for successively presenting to the user auxiliary content included in each of the plurality of pieces of service-related information in accordance with a prescribed method of presentation, means for receiving a selection instruction by the user selecting the content service corresponding to the auxiliary content presented by the successively presenting means, and means for displaying the auxiliary content corresponding to the content service selected by the selection instruction.

When a plurality of pieces of service-related information is received, auxiliary content thereof is successively presented to the user in a prescribed manner of presentation. Even when a plurality of pieces of service related information is received simultaneously, the auxiliary content of the pieces of service-related information can be presented, without interrupting processing of the content that is being reproduced. If desired, the user can switch to processing of the content that corresponds to any piece of service-related information, or to continue processing of the present content.

More preferably, the content service includes a content service through broadcast through a plurality of channels. The content processing means includes receiving means for receiving the broadcast, and means for selecting and reproducing a broadcasting signal corresponding to the designated content service, from broadcasting signals received by an antenna.

It is usually the case that broadcast content is on-air only once in accordance with broadcasting schedule. When the service-related information is received timely, it becomes possible for the user to view one that is of interest among the simultaneously broadcast contents.

A computer program in accordance with a second aspect of the present invention causes, when executed by a computer having a communication function and a content receiving function, the computer to operate as any of the content reproducing apparatus described above. Therefore, the similar effects as those of the content reproducing apparatuses can be obtained.

A computer readable recording medium in accordance with a third aspect of the present invention records the above-described computer program.

A method of providing service-related information facilitating an access to a content service provided by a prescribed content providing server to a potential user of the content service in accordance with a fourth aspect of the present invention includes the steps of: obtaining service identifying information for identifying the content service from the prescribed content providing server; and transmitting the service identifying information to a content reproducing apparatus related to the potential user through a network.

The service identifying information is obtained from the content providing server, and the service identifying information is transmitted to the content reproducing apparatus related to the potential user through the network. Obtaining the service identifying information, the potential user accesses to the content providing server, using the information. The content providing server transmits information necessary to reproduce the content that corresponds to the service identifying information transmitted from the potential user, to the content reproducing apparatus that transmitted the service identifying information. Using this information, the content reproducing apparatus can reproduce the content.

The only necessary operation of the content reproducing apparatus to reproduce the content is simply to transmit the service identifying information and the related information to the content providing server and to reproduce the content using the information transmitted in response. As the service-related information including the service identifying information is given to a potential user, the content to be provided by the content providing server can be known. When the content reproducing apparatus receives the service-related information, the information necessary for reproducing the content can be obtained without requiring the potential user to do any troublesome operation, and reproduction of the content can be started. As a result, a method of providing service-related information can be realized, in which information related to content to be provided by the content providing server can be given to the user, and the user can easily and directly confirm the content.

Preferably, the obtaining step includes the step of obtaining the service identifying information for identifying the content server and information (authentication information) related to access permission for the content provided by the content providing server, from the prescribed content providing server; and the transmitting step includes the step of transmitting the service identifying information and the authentication information to the content reproducing apparatus related to the potential user through the network.

The authentication information is data used in an authentication procedure necessary to access the content, transmitted from the content providing server. The content providing server can determine, based on the service identifying information and associated authentication information from the content reproducing apparatus, whether the information for processing the content identified by the service identifying information may be transmitted to the content reproducing apparatus or not. When the content reproducing apparatus or an organization providing the service-related information has a prescribed agreement with the content providing server, the authentication information related to access permission to the content is obtained in advance through mutual authentication with the content providing server, using shared string of data for mutual authentication. The authentication information represents a string of data generated and stored in the content providing server, and whether the information for reproducing the content may be transmitted or not is determined by the content providing server, by collation with a piece of information recorded at the time of issuing the authentication information in the content providing server. It becomes possible to let a potential user know about the content, while preventing leakage of information stored in the content providing server.

Preferably, the content service provides content that requires a prescribed key for reproduction. The method further includes the step of obtaining key information required for reproducing the content provided by each content providing server from the prescribed content providing server. The transmitting step includes the step of transmitting, in addition to the service identifying information, the key information of the content provided by the content providing server identified by the service identifying information to the content reproducing apparatus related to the potential user through the network.

The key information for processing the content is obtained from the content providing server, and transmitted, together with the service identifying information and the authentication information, to the content reproducing apparatus. In the content reproducing apparatus, as the key information for processing the content can immediately be obtained, the content provided by the service identified by the service identifying information can be reproduced without the necessity of accessing the content providing server to obtain the key information. Even when there is no subscription agreement with the content providing service, it is possible to access and reproduce the content. As a result, it becomes possible to let a potential user know about the information related to the content that requires a key for reproduction, and to reproduce the content. The content cannot be reproduced by the apparatus to which the key information is not transmitted, and hence, the information related to the content can be transmitted only to the desiring potential user, while limiting accesses to the content service.

Preferably, the content service is a broadcasting service for broadcasting scrambled content in accordance with a timetable prepared in advance. The obtaining step includes the step of obtaining, from the prescribed content providing server, service identifying information for identifying the content service, authentication information related to access permission to the content identified by the service identifying information, and schedule information representing broadcast schedule of the content provided by the content providing server. The transmitting step includes the step of transmitting, for each piece of service identifying information, the service identifying information and the authentication information at a timing determined by the broadcast schedule of the content identified by the service identifying information, to the content reproducing apparatus related to the potential user through the network.

In accordance with the schedule of providing content to be provided by the content service, the information related to the content can be given at a good timing to a potential user.

Preferably, the content service is a broadcasting service for broadcasting scrambled content in accordance with a timetable prepared in advance. The method further includes the step of collecting, for each potential user, selection information necessary for selecting content. The obtaining step includes the step of obtaining, from the prescribed content providing server, service identifying information for identifying the content service, authentication information related to access permission to the content identified by the service identifying information, and attribute information representing content attribute attached to the content in advance. The transmitting step includes, for each potential user and each piece of the service identifying information, the step of selecting, from the content service identified by the service identifying information, content of which service related information is to be transmitted to the potential user, based on the selection information collected for the potential user and on the attribute information of the content, and the step of transmitting, at a timing determined by broadcast schedule of the content, the service identifying information and the authentication information to the content reproducing apparatus related to the potential user through a network.

It is possible to give information related to appropriate content for each potential user at an appropriate timing, in accordance with the schedule of providing content by the content providing service. Information not of interest to the user is not provided, or the information of content of interest to the user is not provided at a timing unrelated to the timing of broadcast. Information of interest to the user can be provided at a good timing. Further, only the user who has valid authentication information can reproduce the content. Therefore, an operation that allows only a desiring user to confirm the content becomes possible.

Preferably, the content service is a broadcasting service for broadcasting scrambled content in accordance with a timetable prepared in advance. The obtaining step includes the step of obtaining, from the prescribed content providing server, service identifying information for identifying the content service, authentication information related to access permission to the content identified by the service identifying information, schedule information representing broadcast schedule of the content provided by the content service, and key information for descrambling content provided by the content service. The transmitting step includes the step of transmitting, for each piece of service identifying information, the service identifying information, the authentication information and the key information, at a timing determined by the broadcast schedule of the content of the content service identified by the service identifying information, to the content reproducing apparatus related to the potential user through the network.

In accordance with the content providing schedule provided by the content providing server, the information related to appropriate content can be given at a good timing, for each potential user. Information of content not of interest to the user will not be provided, or content of interest to the user will not be provided at a timing not at all related to the timing of broadcast. Information good for the user can be provided at good timing. Further, the key information for descrambling the content is directly applied to the content reproducing apparatus of the user without the necessity to make an access to the content providing server, and the contents can be reproduced thereby.

Preferably, the transmitting step includes the step of transmitting, in addition to the service identifying information, address information for accessing the content providing server, to the content reproducing apparatus related to the potential user through the network.

When there is a plurality of content providing servers, the address information for accessing the content providing server is explicitly notified to the content reproducing apparatus. Therefore, it becomes possible, by way of example, to provide one same content service distributed through a plurality of servers, in view of dispersing services. Thus, concentration of accesses to the content can be avoided, and smooth confirmation of content by the user is possible.

Preferably, the transmitting step includes the step of transmitting, in addition to the service identifying information, address information for accessing an authentication server performing authentication related to access permission to the content service identified by the service identifying information, to the content reproducing apparatus related to the potential user through the network.

When there is an authentication server separate from the content providing server, the authentication server for performing the authentication process related to the content service provided by the content providing server can be designated. As the access destination to the authentication server provided separate from the content providing server can be explicitly designated, it becomes possible to access the server providing appropriate function, in view of load distribution and function distribution.

A computer program in accordance with a fifth aspect of the present invention causes, when executed by a computer having a communication function, the computer to carry out any of the methods of providing service-related information described above. Therefore, similar effects as the providing method described above can be attained.

A computer readable recording medium in accordance with a sixth aspect of the present invention records the above-described computer program.

A service-related information providing apparatus for providing service-related information of services made available by prescribed key information in accordance with a seventh aspect of the present invention includes: authentication information storing means for storing authentication information for authenticating an external apparatus; first transmitting means responsive to a request from a first external apparatus for service-related information related to the service provided by the service-related information providing apparatus, for authenticating the first external apparatus using the authentication information stored in the authentication information storing means, and for transmitting the service-related information to the first external apparatus only when the first external apparatus is authenticated; and second transmitting means responsive to a request from a second external apparatus for key information designating any of the services, for transmitting the designated key information to the second external apparatus. The request for the key information includes authentication information for obtaining key information for using any of the services. The second transmitting means includes key transmitting means for authenticating whether the request for key information was made based on the service-related information transmitted by the first transmitting means or not, using the authentication information included in the key information, and for transmitting, upon request of the authenticated key information, the key information requested by the key information request to the second external apparatus that transmitted the request.

When the first external apparatus requests the service-related information, the first transmitting means authenticates the first external apparatus, and only when authentication succeeds, transmits the service-related information to the first external apparatus. When there is a request for transmitting key information designating any of the services from the second external apparatus, the key transmitting means of the second transmitting means authenticates whether the request was made based on the service-related information transmitted by the first transmitting means, and transmits the requested key information to the second external apparatus.

By this configuration, the first external apparatus of which authentication succeeded can obtain the service-related information from the service-related information providing apparatus. Further, the first external apparatus can transmit to the second external apparatus the authentication information for obtaining the key information required for utilizing the prescribed service based on the service-related information. Using the authentication information, the second external apparatus transmits the request for the key information necessary for utilizing the prescribed service to the service-related information providing apparatus, and can obtain the key information. The first external apparatus can introduce the presence of the prescribed service to the second external apparatus, and at the same time, let the second external apparatus obtain the key information for utilizing the service.

Preferably, the first transmitting means includes means responsive to a request from the first external apparatus for the service-related information related to the service provided by the service-related information providing means and for key information for using the service, for authenticating the first external apparatus using the authentication information stored in the authentication information storing means, and means for transmitting, to the first external apparatus authenticated by the authentication means, the service-related information related to the service requested by the first external apparatus and key information with validity period for using the service.

More preferably, the request for key information further includes apparatus identifying information of the second external apparatus. The key transmitting means includes authentication means for authenticating whether the request for key information was made based on the service-related information transmitted by the first transmitting means or not, using the authentication information included in the request for key information, registering means for registering the apparatus identifying information and service identifying information designated by the request for key information authenticated by the authenticating means associated with each other, and means for transmitting the key information to the apparatus identified by the identifying information registered in the registering means the key information for using the service identified by the corresponding service identifying information registered in the registering means.

More preferably, the key transmitting means includes authentication means for authenticating whether a request for key information was made based on the service-related information transmitted by the first transmitting means or not, using the authentication information included in the request for key information, and means for transmitting, in response to a request for key information authenticated by the authentication means, the key information requested by the request for key information with validity period, to the second external apparatus that transmitted the request.

The service-related information providing apparatus may further include service providing means for providing the service made available by using the prescribed key information.

A service providing system in accordance with an eighth aspect of the present invention includes: a service related information providing apparatus responsive to a request from an external apparatus for service-related information, for transmitting the requested service-related information to the external apparatus; a service information transmitting apparatus for requesting the service-related information providing apparatus for the service-related information, and based on the service-related information transmitted in response from the service-related information providing apparatus, transmitting to a prescribed apparatus notice information including service specifying information specifying a prescribed service and service utilizing information necessary for using the service specifying information; and a service using apparatus responsive to the notice information, for accessing the service specified by the service specifying information included in the notice information and using the service using the service utilizing information included in the notice information.

The service specifying information may be service identifying information for uniquely identifying the service, or it may be an address of the server that provides the service. The service utilizing information may be key information that becomes necessary when the content provided by the service is to be reproduced, or it may be log-in information for logging-in the server for using the service. The notice information offers notice of at least the service specifying information and the service utilizing information to the service using apparatus, and it may be any information that is transmitted by communication. The notice information may, for example, be promotion information to promote service, announcing the existence of the service to a plurality of users. The service information transmitting apparatus refers to an apparatus that has a function of transmitting such notice information to the user. The service using apparatus refers to an apparatus for using the service, and it may be a content reproducing apparatus for reproducing the content provided by a server.

Preferably, the service-related information providing apparatus includes means responsive to a request from an external apparatus for the service-related information, for transmitting to the external apparatus the requested service-related information and key information required for using a service related to the service-related information. The service information transmitting apparatus includes means requesting the service-related information providing apparatus for the service-related information, and based on the service-related information transmitted in response from the service-related information providing apparatus and on the key information, transmitting to a prescribed apparatus notice information including service specifying information specifying a prescribed service and the key information required for using the service specified by the service specifying information. The service using apparatus includes means responsive to the notice information for accessing the service specified by the service specifying information included in the notice information, and using the service utilizing the key information included in the notice information.

The service information transmitting apparatus includes means for requesting the service-related information providing apparatus for the service-related information, and based on the service-related information transmitted in response from the service-related information providing apparatus, transmitting to a prescribed apparatus notice information including service specifying information specifying a prescribed service and key obtaining information for obtaining the key information required for using the service specifying information; and the service using apparatus may include means responsive to the notice information for obtaining the key information based on the key obtaining information included in the notice information, accessing the service specified by the service specifying information and using the service utilizing the key information.

### Effects of the Invention

As described above, according to the content reproducing apparatus of the present invention, the contents can be processed without any troublesome procedure to receive the key information. Therefore, the user can easily check what the content is like. Further, a scheme of providing content that allows use only for a prescribed time period is realized, and hence, a system can be realized in which the content can be viewed through zapping. When the key transmission request is adapted to include authentication information, it becomes possible to inform prospective users of desired content and let the users directly process the content, while maintaining confidentiality of the content.

By incorporating the authentication information in the service-related information, it becomes possible to introduce the content to potential users while preventing leakage of information stored in the content providing server.

Even if subscription for the content providing service is not registered with the content providing server, it is possible to access and reproduce the content. Information related to scrambled content can be given to potential users, and can be processed immediately. As the content cannot be processed by an apparatus to which the key information is not transmitted, it is possible to provide information related to the content only to desired potential users while limiting access to the content providing service.

In accordance with the content providing schedule provided by the content providing server, information related to appropriate content can be introduced to each potential user at a good timing. Information of content not of interest to the user will not be provided, or content of interest to the user will not be provided at a timing not at all related to the timing of broadcast. Information good for the user can be provided at good timing.

When there is a plurality of content providing servers and information related to the plurality of servers is given to the content reproducing apparatus, it becomes possible to make an access to an alternative server if a connection to a specific content providing server should fail. Accordingly, a scheme can be realized in which the content reproducing apparatus of the user can access the content efficiently without any problem.

According to the present invention, when the content reproducing apparatus receives the service-related information, the information necessary for processing the content can be obtained and processing of the content can be started, without requiring any troublesome operation of the potential user. Therefore, the user can easily check the content. As a result, a method of providing service-related information is realized, which can introduce information related to the content provided by the content providing server to the user and at the same time, allows the user to easily check the content.

In the present specification, the service for providing a service will be referred to as "content service." An example of the content service is a broadcasting service that provides content through broadcast.

### Brief Description of the Drawings

Fig. 1 schematically shows a configuration of a broadcasting service information providing system 30 in accordance with a first embodiment of the present invention.
Fig. 2 shows an example of an EPG in XML format.
Fig. 3 is a block diagram representing a functional configuration of a broadcasting server 40 in accordance with the first embodiment.
Fig. 4 is a block diagram representing a functional configuration of a service information transmitting apparatus 42 in accordance with the first embodiment.
Fig. 5 shows a data structure of a template 130.
Fig. 6 shows detailed configuration of main content reference information 141 in template 130.
Fig. 7 is a sequence diagram schematically showing a process of obtaining service information between broadcasting server 40 and service information transmitting apparatus 42 in accordance with the first embodiment.
Fig. 8 shows a specific example of main content reference information 141.
Fig. 9 shows an appearance of content reproducing apparatus 44 in accordance with the first embodiment.
Fig. 10 is a functional block diagram of content reproducing apparatus 44.
Fig. 11 shows a relation between a plurality of templates stored in a template storing unit 236 and a template interpreting unit 232, in accordance with the first embodiment.
Fig. 12 is a flow chart of a program for realizing functions of template processing unit 222 of content reproducing apparatus 44, in accordance with the first embodiment.
Fig. 13 is a flow chart representing a process executed by template processing unit 222 when a template receiving event or a service management information receiving event occurs, in the first embodiment.
Fig. 14 shows a configuration of a key retrieving request 320.
Fig. 15 shows a configuration of key information 56.
Fig. 16 shows a transition on a screen in an automatic mode of content reproducing apparatus 44 in accordance with the first embodiment.
Fig. 17 shows a transition on a screen in a semi-automatic mode of content reproducing apparatus 44 in accordance with the first embodiment.
Fig. 18 shows a transition on a screen in a manual mode of content reproducing apparatus 44 in accordance with the first embodiment.
Fig. 19 shows an exemplary display when template interpreting unit 232 asks a user to select a template in the manual mode, in content reproducing apparatus 44 in accordance with the first embodiment.
Fig. 20 is a block diagram representing an operation of content reproducing apparatus 44 in accordance with the first embodiment.
Fig. 21 is a block diagram representing an operation of content reproducing apparatus 44 in accordance with the first embodiment.
Fig. 22 schematically shows a configuration of a broadcasting service providing system 430 in accordance with a second embodiment.
Fig. 23 is a block diagram of a broadcasting server 440 in accordance with the second embodiment.
Fig. 24 shows a configuration of main content reference information 490 included in promotion information transmitted from service providing server in accordance with the second embodiment.
Fig. 25 shows an example of main content reference information 490 described in XML.
Fig. 26 is a block diagram schematically showing a configuration of a service reproducing apparatus in accordance with the second embodiment.
Fig. 27 is a flow chart representing a process executed by a template processing unit 522 when a template receiving event or a service management information receiving event occurs.

### Description of Reference Characters

30, 430 broadcasting service information providing system, 40, 440 broadcasting server, 42 service information transmitting apparatus, 44, 442 content reproducing apparatus, 46 Internet, 48 transmission request, 50 service ID information, 52 promotion information, 54 key information request, 56 key information, 58 broadcasting wave, 70 service information DB, 72 provider authentication DB, 74 service ID transmitting unit, 76 key information DB, 78 content DB, 80 key transmission processing unit, 82 content broadcast processing unit, 86, 106 network interface, 87 user registration DB, 88 key refreshing unit, 90 input I/F, 92 auxiliary content reception processing unit, 94 auxiliary content DB, 96 template reception processing unit, 98 template DB, 100 promotion information generating unit, 102 promotion information DB, 104 service ID storing unit, 108 authentication information storing unit, 110 service ID retrieving unit, 112 timer, 114 user registration processing unit, 115 promotion information control unit, 116 subscriber DB, 118 promotion information transmitting unit, 200 input/output portion, 210 communication unit, 212 broadcast receiving unit, 214 content data storing unit, 216 content processing unit, 218 display unit, 220 user input processing unit, 222 template processing unit, 224 transmission data formatting unit, 230, 520 service management unit, 232, 522 template interpreting unit, 234 template selecting unit, 236 template storing unit, 238 template extracting unit, 240 service management information extracting unit, 454 registration procedure request, 456 key information, 474 service ID/key transmitting unit, 476 registration and key transmission processing unit

### Best Modes for Carrying Out the Invention

### <First Embodiment>

It is not expected that a specific program attracts special attention by a user if the program information provided by the EPG were simply provided for use by the user in a conventional manner. In the present embodiment, a piece of promotion information is formed to inform a user of the specific program, and a framework is provided for transmitting the piece of information to a service reproducing apparatus related to a broadcasting service or the like. By way of example, the service reproducing apparatus represents a TV receiver connectable to a network, a portable telephone or portable information equipment having the function of receiving TV broadcast, a personal computer or the like. It is noted, however, that these are mere examples and any apparatus that can utilize the content provided by the content providing server and can receive the piece of promotion information described above may be used.

### [System Overview]

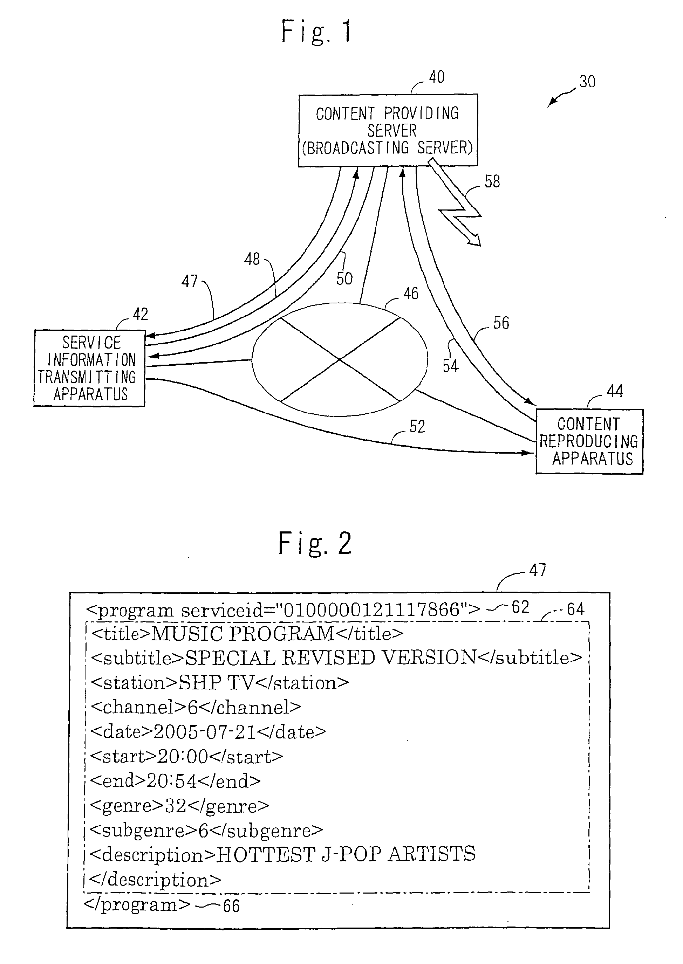

Fig. 1 schematically shows a broadcasting service information providing system 30 in accordance with a first embodiment of the present invention. Referring to Fig. 1, broadcasting service information providing system 30 includes a plurality of apparatuses that can communicate with each other through the Internet 46. Specifically, broadcasting service information providing system 30 includes: a broadcasting server 40 offering content services of broadcasting programs of one or a plurality of channels by broadcasting waves 58 and posting an EPG related to the broadcast programs as service-related information; a service information transmitting apparatus 42 authenticated in advance from broadcasting server 40, and providing a promotion information notifying service wherein information related to the program broadcast by broadcasting server 40 is obtained from broadcasting server 40 and notifying a specific user or users of related promotion information; and a content reproducing apparatus 44 having the function of receiving the promotion information from service information transmitting apparatus 42 and receiving and reproducing the broadcast from broadcasting server 40 based on the promotion information.

Part of the broadcasting service provided by broadcasting server 40 is scrambled, and for use, key information for descrambling is necessary. Further, broadcasting server 40 functions as a service-related information providing apparatus that provides service-related information related to the program, which is the content broadcast by the broadcasting server 40.

In the present embodiment, a special scheme is used such that even when the content data transmitted over the broadcasting wave are scrambled, the corresponding program can be reproduced only for a prescribed time period by content reproducing apparatus 44. The procedure therefor is as described below. In the following description, it is assumed that the confidential information is encrypted by an encryption method using a public key. Further, an electronic signature is used to detect any falsification of each request and to prove authenticity of the issuer of the request.

It is further assumed that service information transmitting apparatus 42 has already obtained an EPG 47 as the program information related to the broadcast content from broadcasting server 40. An example of EPG 47 is shown in Fig. 2.

Referring to Fig. 2, EPG 47 includes a program information start tag 62, a program information end tag 66, and program information 64 describing program information, placed between tags 62 and 66. Program information 64 includes a piece of service identifying information (in this example, a string of characters, "0100000121117866"). In the following the identifying information will be simply denoted by "ID". In the present embodiment, program information 64 includes a title, a subtitle, name of the broadcasting station, channel number, scheduled date of broadcast, scheduled start time of broadcast, scheduled end time of broadcast, genre, sub-genre, and auxiliary information of the program. Fig. 2 shows an exemplary EPG 47 described in XML (eXtended Markup Language). The format for describing EPG 47 is not limited to this, and any format may be used provided that the format is uniform within the system 30. EPG 47 may include information other than those shown in Fig. 2.

In the first step, service information transmitting apparatus 42 refers to EPG 47, and transmits a transmission request 48 for information related to a necessary service (hereinafter referred to as "service information") to broadcasting server 40. Broadcasting server 40 confirms whether the service information transmitting apparatus 42 that has transmitted transmission request 48 is the authenticated server authenticated in advance by broadcasting server 40 or not, using previously prepared shared information. The previously prepared shared information refers to key information determined and shared beforehand by service information transmitting apparatus 42 and broadcasting server 40. If transmission request 48 is from authenticated service information transmitting apparatus 42, broadcasting server 40 returns broadcasting service-related information (service ID information 50) corresponding to the service ID (service identifying information) included in transmission request 48 to service information transmitting apparatus 42. The broadcasting service-related information includes information for accessing the service, and authentication information related to access permission to the service. Here, broadcasting server 40 records the ID of service information transmitting apparatus 42 as the source of transmission of transmission request 48, returned service ID and authentication information related to the service access permission, together with time of issuance. Details of the procedure between service information transmitting apparatus 42 and broadcasting server 40 (hereinafter referred to as "service information obtaining process") when service information transmitting apparatus 42 obtains the service information will be described later.

The service ID refers to identification information for uniquely specifying a service corresponding to each program, and in this embodiment, it is assumed that the service ID is described in the EPG data as a unique string of data corresponding to each program.

The service ID is further utilized in accordance with various forms of providing service particular to the broadcasting service, for uniquely indicating various and many broadcasting services such as services provided by each of pay-TV broadcasting stations, services provided in smaller unit of program by program, services provided as a package from a plurality of pay-TV stations and so on. By way of example, for a subscriber of a paid package, it may be used as an ID that designates a scope of viewable programs such as all the viewable paid broadcast by the stations or plurality of viewable programs. The service ID in this sense is different from the service ID as unique ID information indicating a program typically included in the EPG, and it may be given to the viewer directly and not included in the EPG, and the meaning thereof may not always indicate a single program. In that case, it may be simply converted to an ID indicating a program, in broadcasting server 40. In the present embodiment, the service ID described directly in the EPG is considered to uniquely indicate a program.

In service information transmitting apparatus 42, user information related to the destination of service such as an IP address or machine address (hereinafter referred to as "machine ID information") of the content reproducing apparatus 44 of the user who applied for the service in advance are prepared. The service information transmitting apparatus 42 periodically obtains the broadcasting service-related information from broadcasting server 40 using the service ID included in the EPG data, and based on the obtained information and the user information, it forms a piece of promotion information 52 for each user. Further, in accordance with the broadcasting schedule, when it gets to a good time for transmitting pieces of promotion information 52 for respective broadcasting services, service information transmitting apparatus 42 transmits the pieces of promotion information 52 to registered content reproducing apparatus 44. The transmitted promotion information 52 is referred to as "template", of which details will be described later. The template includes information related to content service (service-related information) such as information necessary to obtain key information for content reproducing apparatus 44 to descramble the broadcast from broadcasting server 40. The template transmitting timing can be designated beforehand. The information representing the transmission timing is applied as initial information to service information transmitting apparatus 42 at the time of application for the service, and stored as part of the information that can be changed later, as part of the user information.

Receiving promotion information 52, content reproducing apparatus 44 extracts information necessary to receive the key information to descramble the content from the template included in promotion information 52, forms a key information request 54 to broadcasting server 40, and transmits the same to broadcasting server 40. Broadcasting server 40 collates the key information request 54 transmitted from content reproducing apparatus 44 and the authentication information related to the service ID within held by itself and the access permission of the corresponding service. If the key information request 54 is the key information request formed based on the promotion information 52 transmitted from authenticated service information transmitting apparatus 42, broadcasting server 40 returns key information 56 for descrambling broadcasting content corresponding to the service ID, to content reproducing apparatus 44. Receiving the key information 56, content reproducing apparatus 44 descrambles and reproduces the content transmitted over the broadcasting wave 58, using the key information.

Descrambling and reproducing of content in content reproducing apparatus 44 are managed by a service managing unit implemented in content reproducing apparatus 44. By way of example, the managing unit realizes such processes that the validity period of the key expires after a prescribed time from the start of viewing and reproduction of content is stopped, or at the timing when validity period of the key expires, the key may be automatically updated. The key is updated only when there is a subscription agreement with the service provider as to the provision of service based on the service ID. Specifically, to a content reproducing apparatus 44 with regular service subscription agreement, a message for updating the key is transmitted periodically, whereby the service management unit in the content reproducing apparatus automatically updates the key.

Substantially, both the broadcasting server 40 and the service information transmitting apparatus 42 are realized by hardware such as a computer having a communication function, large capacity storage and a central processing unit (CPU), and a computer program executed by the CPU. Such a program is stored in a removable storage, not shown, and supplied to broadcasting server 40 and service information transmitting apparatus 42, and stored in a non-volatile storage medium (such as a hard disk) of broadcasting server 40 and service information transmitting apparatus 42. At the time of execution, the program is loaded to a memory and executed by the CPU.

Content reproducing apparatus 44 also has a hardware configuration that is substantially the same as a computer. It may, however, be implemented in various forms in accordance with intended use, such as a TV receiver having a communication function, or a portable telephone or a PDA (Personal Digital Assistant) having a function of receiving TV broadcast. In the present embodiment, content reproducing apparatus 44 is in the form of a PDA, as will be described later.

### [Configuration]

### -Broadcasting Server 40-

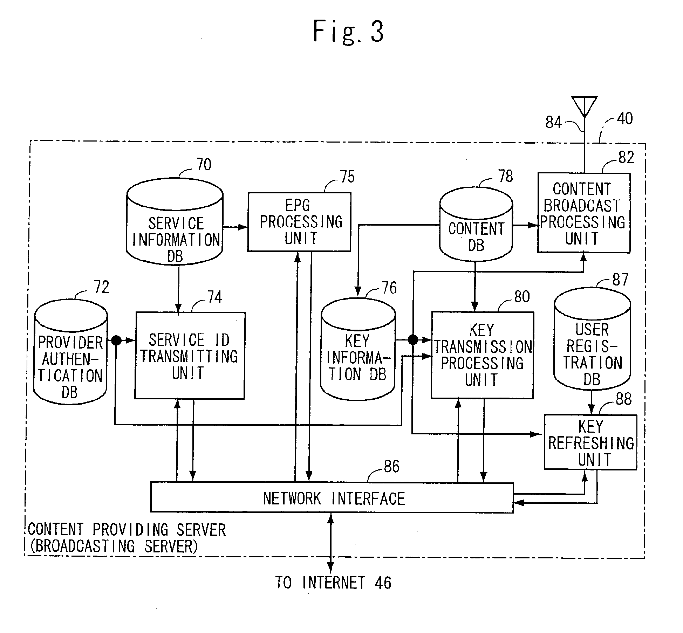

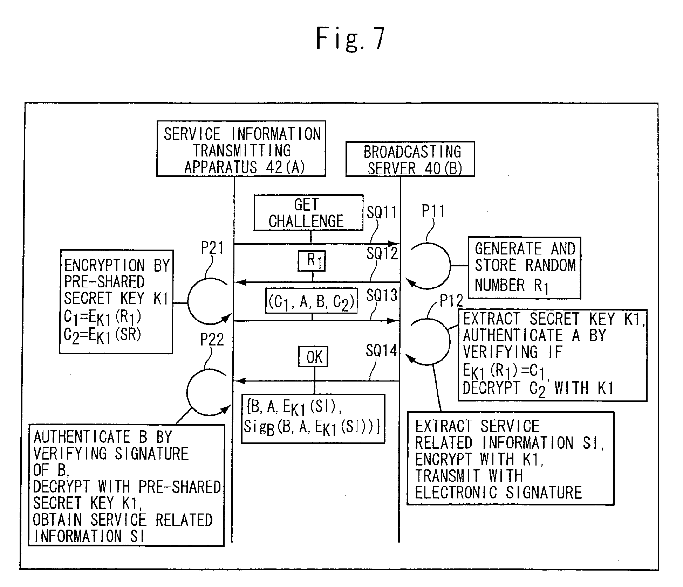

Fig. 3 shows a configuration of broadcasting server 40. Broadcasting server 40 includes: a provider authentication DB (database) 72 for storing authentication information of an external apparatus or an owner of the external apparatus such as service information transmitting apparatus 42 having an agreement with broadcasting server 40 as a provider; a service information DB 70 storing information of broadcasting service related to the broadcast from broadcasting server 40 and for management based on the service ID; a network interface 86 as an interface with the Internet 46; a service ID transmitting unit 74 responsive to reception of a transmission request 48 from an external apparatus such as service information transmitting apparatus 42 through network interface 86, for authenticating the external apparatus that transmitted the transmission request 48 using provider authentication DB72, extracting service-related information required to receive each service from the service information stored in service information DB70 in connection with the broadcast content in response to only the request from an authenticated provider, and returning it to the service information transmitting apparatus 42 through network interface 86; and an EPG processing unit 75 for performing a process of transmitting to service information transmitting apparatus 42 through network interface 86 the EPG data formed by extracting the service information stored in service information DB 70. Service ID transmitting unit 74 also has a function of generating a random number for executing Challenge-Response authentication, which will be described later with reference to Fig. 7.

Broadcasting server 40 further includes: a content DB 78 for storing content data to be transmitted through an antenna 84; a key information DB 76 for storing key information for descrambling the content stored in content DB78 in association with the service ID related to the content and with the user terminal information whose subscription of the content has been registered; a key transmission processing unit 80 responsive to reception of key information request 54 from content reproducing apparatus 44 through network interface 86, for confirming whether the key information request 54 is from a content reproducing apparatus 44 properly received the promotion information from authenticated service information transmitting apparatus 42 or not, and to the authenticated key information request 54, reading the corresponding key information from key information DB 76 and returning it to content reproducing apparatus 44; and a content broadcast processing unit 82 reading content from content DB 78 in accordance with a prescribed broadcast schedule, scrambling the content using the key information stored in key information DB 76 and transmitting the content as radio waves through antenna 84.

Broadcasting server 40 further includes: a user registration DB 87 for storing information related to users regularly registered for the service; and a key refreshing unit 88 for executing a process of periodically transmitting key information for descrambling to the content reproducing apparatus of the user registered in user registration DB87 through network interface 86, for the program transmitted from broadcasting server 44.

### -Service information transmitting apparatus 42-

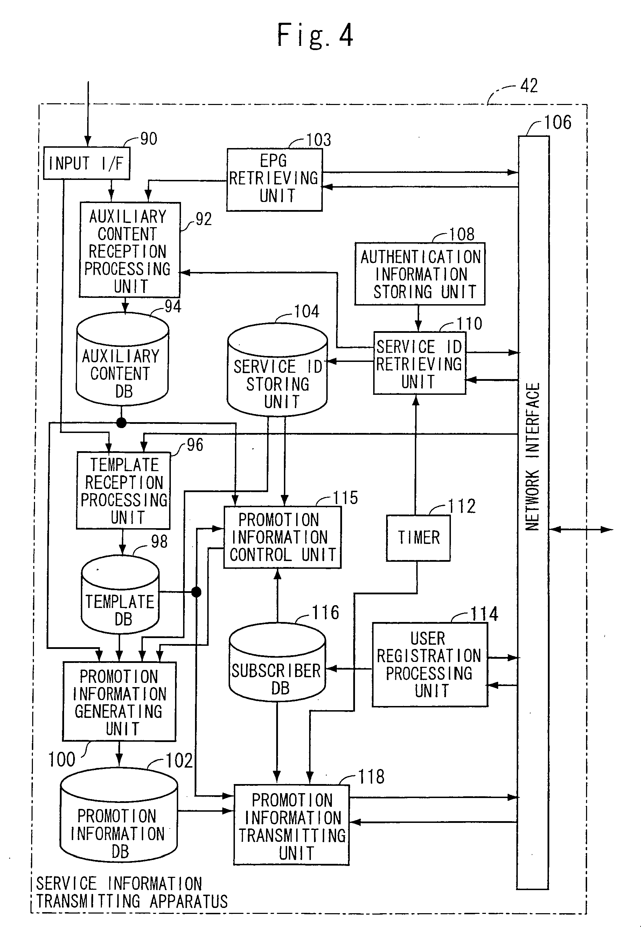

Referring to Fig. 4, the configuration of service information transmitting apparatus 42 will be described. Service information transmitting apparatus 42 includes: a template DB 98 for storing a plurality of pieces of information (referred to as "templates") as a base for forming the promotion information; an auxiliary content DB 94 for storing a plurality of auxiliary content items that form a part of the promotion information when combined with the template; a network interface 106 providing an interface with the Internet 46 (see Fig. 1); an input interface (I/F) 90 for receiving, as an input, externally formed auxiliary content or template; a template reception processing unit 96 for performing a process of storing, in template DB 98, a template received from the outside through input I/F 90 or received from another apparatus on the Internet 46 through network interface 106; an auxiliary content reception processing unit 92 for performing a similar process of storing, in auxiliary content DB 94, auxiliary content received from the outside or received from another apparatus, or extracted internally; and EPG retrieving unit 103 obtaining and managing the EPG through network interface 106. In the present embodiment, the content information included in the data received by EPG retrieving unit 103 and service ID retrieving unit 110 is stored by auxiliary content reception processing unit 96 in auxiliary content DB 94.

Service information transmitting apparatus 42 further includes: an authentication information storing unit 108 for storing previously prepared shared information as authentication information for transmitting transmission request 48 to broadcasting server 40, delivered and shared by broadcasting server 40 through an agreement made in advance with an operator of broadcasting server 40 (see Fig. 1); a service ID retrieving unit 110 transmitting the transmission request 48 to broadcasting server 40 through network interface 106 using the authentication information stored in authentication information storing unit 108, and in response, receiving the service ID of the broadcast service and the broadcast service-related information from broadcasting server 40; and a service ID storing unit 104 for storing the service ID obtained by service ID retrieving unit 110 and the service management information necessary for the access thereto. Service ID retrieving unit 110 also has a function of issuing, to broadcasting server 40, a GetChallenge command, when the Challenge-Response authentication shown in Fig. 7 is to be executed.

Service information transmitting apparatus 42 further includes: a user registration processing unit 114 for receiving, through network interface 106, a service registration request from a user who applies for the service provided by service information transmitting apparatus 42; a subscriber DB 116 for storing user ID, terminal ID, terminal address and user preference (taste for programs) information of the user and the like, of the user received by the user registration processing unit 114; a promotion information control unit 115 controlling generation of promotion information, in accordance with updating of contents in service ID storing unit 104 or time indicated by a timer 112; a promotion information generating unit 100 for forming, for each registered user/program, the promotion information related to a program, using the auxiliary content stored in auxiliary content DB 94, templates stored in template DB98, service ID stored in service ID storing unit 104, and service management information necessary for the access thereto; and promotion information DB 102 storing the pieces of promotion information formed by promotion information generating unit 100.

Service information transmitting apparatus 42 further includes: a timer 112; and a promotion information transmitting unit 118 for performing a process of transmitting the promotion information through network interface 106 to each registered terminals of users selected as destination of the promotion information among the users registered in subscriber DB 116 whose preference information and attribute information of the EPG have matched, based on the time indicated by the timer 112 and broadcasting information of the program included in each piece of promotion information, when it gets to a good time for transmitting the promotion information of a certain program. Accordingly, it is possible for the user of content reproducing apparatus 44 to set the timing of transmitting the promotion information as a part of user preference information, though not shown. By such setting, it is possible for the user to obtain the promotion information periodically at a desired time, because of the control by promotion information transmitting unit 118. In the present embodiment, the operation of service ID retrieving unit 110 is also performed periodically, with reference to the time information given by timer 112.

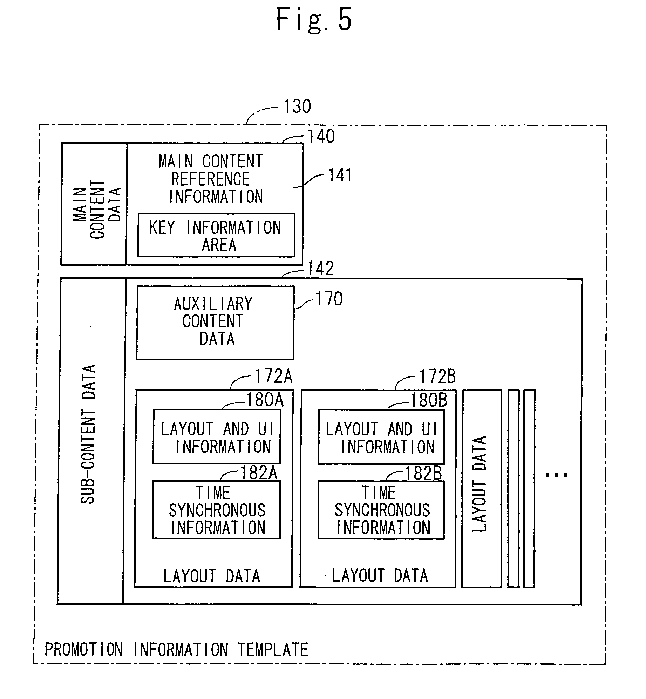

Fig. 5 shows an exemplary configuration of a template 130 of the promotion information stored in template DB 98. Template 130 is used for transmission from service information transmitting apparatus 42 to content reproducing apparatus 44. In addition, key information request 54 transmitted from content reproducing apparatus 44 to broadcasting server 40 and key information 56 transmitted from broadcasting server 40 to content reproducing apparatus 44 are also formed with reference to the information included in the template.

Referring to Fig. 5, template 130 includes main content data 140 as information necessary to refer to the main contents (program), and sub-content data forming, together with the main content, part of the contents.

Main content data 140 includes main content reference information 141 and a key information area, which will be described later. The main content of the present embodiment is streaming video images, and it is assumed that the video content itself is distributed by broadcast. Therefore, main content data 140 defines information necessary to refer to the main content and the area for the key information required for reproduction of the content. The key information itself, however, is not included in the present embodiment.

Sub-content data 142 includes auxiliary content data 170 including motion pictures, text data, still images or the like displayed together with the main content, or presented or displayed to the user as an element of promotion information, and one or a plurality of layout data 172A, 172B,... describing layout of display of the main content and the auxiliary content.

Layout data 172A, 172B,...include: layout and UI information 180A, 180B,...describing main content and auxiliary content and UI information related to user interface (UI) elements appearing on the displayed image; and time synchronous information 182A, 182B, ... describing information controlling synchronized display, by controlling the timing of changing the layout and the timing of displaying the content.

As shown in Fig. 5, sub-content data 142 may include a plurality of layout data 172A, 172B... and so on. Based on the time synchronous information or layout designation designated by sub-content data 142, contents display is controlled. By way of example, a description may be made such that when a button UI is pushed, image display is switched based on a different layout designation included in the sub-content data. As another example, a description may be made such that when there are a main window and a sub window, the streaming program and the UI for operation of the program are displayed on the main window and texts as auxiliary information is displayed on the sub window. Specifically, in sub-content data 142, layout information for switching the images in accordance with a user operation or a received event is described.

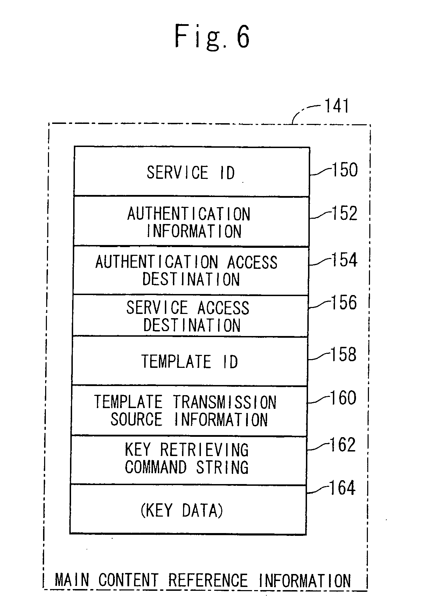

Fig. 6 shows details of main content reference information 141. Based on the main content reference information 141 included in the promotion information template, the data to be transmitted to the broadcasting server 40 is generated in response to the key information request 54 (see Fig. 1). Main content reference information 141 includes: a service ID area 150 indicating a service ID; an authentication information area 152 indicating the authentication information used for authentication by broadcasting server 40; an authenticated access destination area 154 indicating an authenticated access destination used at the time of transmitting the key information request 54; a service access destination area 156 indicating a destination of service access; and a template ID area 158 indicating information specifying the template as a base for forming the promotion information.

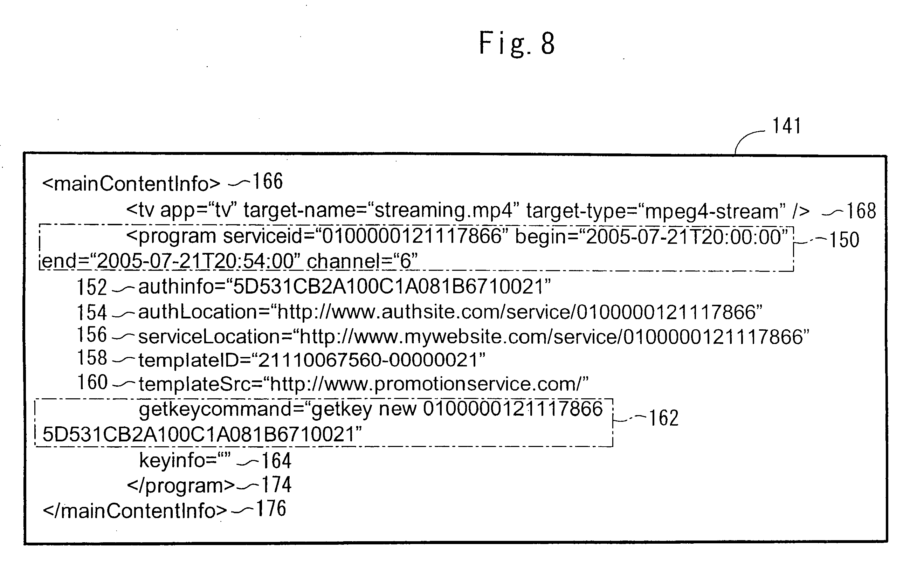

Fig. 8 shows a specific example of main content reference information 141. Referring to Fig. 8, main content reference information 141 of the present embodiment is in the XML format, and includes: a pair of tags 166 and 176 indicating that it is the main content reference information; data type information 168 immediately following tag 166; areas 150, 152, 154, 156, 158, 160 and 162 in which program information including the service ID mentioned above, the authentication information, the authenticated access destination, the service access destination, the template ID, the template transmission source information, and the string of key retrieving command are described; an empty key data area 164; and an end tag 174 of the program information.

In the present embodiment, assuming that there are a plurality of broadcasting servers 40, service access destination area 156 is provided for storing address information of the service access destination. If the broadcasting server 40 is uniquely determined or the information is embedded in the content reproducing apparatus 44, the address information of the service access destination is not always necessary. In that case, service access destination area 156 may be used as an area for storing the address of a spare access destination. Specifically, an address of an alternative server is stored in service access destination area 156, to be used when connection to a specific broadcasting server should fail. When the connection to a broadcasting server to be accessed cannot be established, the address stored in the service access destination area 156 may be used, to connect to the alternative server.

Further, on the premise that the access authentication for the service is performed by an authentication server separate from broadcasting server 40, an authentication access destination area 154 is provided. By the authentication access destination area 154, an arbitrary authentication server can be explicitly designated, and an appropriate function providing server can be accessed in view of dissipating the load. It is possible to store pieces of information of a plurality of authentication servers in authentication access destination area 154, and it is also possible to select one from the plurality of pieces of access destination information.

Main content data 140 further includes: a template transmission source information area 160 indicating the service information transmitting apparatus 42 that transmitted the template as the base of the promotion information; a key retrieving command string area 162 storing the command for obtaining the key information corresponding to the service ID when the key information request 54 is transmitted from content reproducing apparatus 44 to broadcasting server 40; and a key data area 164 storing the key data by the key information transmitted from broadcasting server 40 to content reproducing apparatus 44.

### -Service Information Obtaining Process by Service Information Transmitting Apparatus 42-

Fig 7 shows the service information obtaining process between broadcasting server 40 and service information transmitting apparatus 42. The process is a type of so-called Challenge-Response Authentication. In Fig. 7, service information transmitting apparatus 42 and broadcasting server 44 are respectively represented as service information transmitting apparatus A and broadcasting server B, and suffixes A an B are references as information for identifying the counterpart of transactions between the parties.

Referring to Fig. 7, before transmitting necessary service information request, service information transmitting apparatus A issues a GetChallenge command to broadcasting server B in step (hereinafter simply denoted by "S") Q11, to execute an authentication sequence. Receiving the command, broadcasting server B performs a process P11 of generating a random number, and temporarily stores the generated random number R₁. Further, broadcasting server B transmits the random number R₁ to service information transmitting apparatus A in SQ12.

Receiving the random number R₁, service information transmitting apparatus A performs an operation of encrypting E_{K1}(R₁) the random number R₁ using a pre-shared secret key K1 with broadcasting server B, to obtain a result C₁. Further, service information transmitting apparatus A performs an encrypting operation E_{K1}(SR) on request data SR for obtaining broadcasting service-related information, again using the pre-shared secret key K1, to obtain an output C₂ (in the process P21). In SQ13, service information transmitting apparatus A transmits a quadraple {C₁, A, B, C₂} including the resulting output, to broadcasting server B. The second term A of the quadraple is the ID of the source equipment and the third term B is the ID of the target equipment.

Broadcasting server B that has received the data transmitted from an external server performs the following process P12. Specifically, broadcasting server B confirms whether the received data includes ID information identifying the source-side equipment or not. If there is the ID information, the corresponding equipment information is read from the provider authentication DB using the ID information as a key, and the pre-shared secret key K1 is extracted. Using the extracted pre-shared secret key K1, broadcasting server B performs the encrypting operation on random number R₁ stored in advance in step P11. If the result of encryption is the same as C₁ of the quadraple data, it means that the service information transmitting apparatus A is authenticated. In this case, broadcasting server B decrypts the fourth term C₂ of the received data using the extracted pre-shared secret key K1, to extract the request for obtaining service-related information. Further, broadcasting server B identifies the service information transmitting apparatus A, extracts the service-related information SI corresponding to the received request for obtaining service-related information, and encrypts the information using the pre-shared secret key K1. Broadcasting server B puts together the encrypted service-related information SI, source-side equipment ID and target equipment ID to form a payload, and adds a result of signature made by using a device-private key of the broadcasting server B to the payload, thereby to form an authentication verified notice. In SQ14, broadcasting server B transmits the authentication verified notice formed in this manner to service information transmitting apparatus A.

Receiving the authentication verified notice, service information transmitting apparatus A performs the following process P22 and obtains the service-related information. Specifically, service information transmitting apparatus A verifies the signature added to the authentication verified notice, using a public key for verifying the signature of server B. Thereafter, service information transmitting apparatus A decrypts the service-related information SI using the pre-shared secret key K1 Consequently, service information transmitting apparatus A obtains the service-related information.

In the process P12 of Fig. 7, the obtained output C₁ can be further applied to a prescribed hash function, and the output is used as a key in place of the above-described pre-shared secret key K1 (hash function H(C₁)), and encrypting operation E_{H(C1)}(SR) can be performed on the data SR requesting the broadcast service related information, to obtain the output C₂. In this case, broadcasting server B may have such a configuration that performs the process of identifying the service information transmitting apparatus A by decrypting C₁, thereafter applying C₁ to a prescribed hash function to obtain an output in the process P12, decrypting C₂ as a key and extracting the service related information SI. In that case, it is desirable that the procedures for authentication between the apparatuses are determined in advance.

### -Content reproducing apparatus 44-

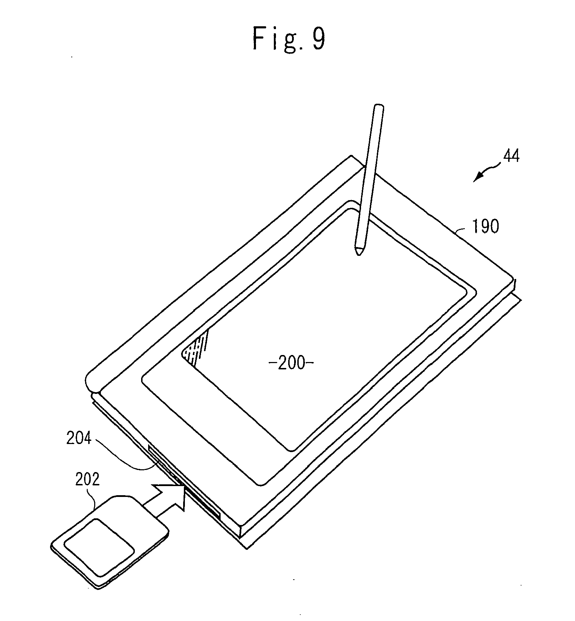

Fig. 9 shows an exemplary appearance of content reproducing apparatus 44. Referring to Fig. 9, content reproducing apparatus 44 shown here is used as a PDA having the function of receiving TV broadcast as described above, and includes a housing 190 that can be held by one hand, an input/output portion 200 serving as a display unit formed of a liquid crystal display and a tablet allowing user input, a card slot 204 to which a memory card can be inserted, various terminals for communication, not shown, and an internal antenna. Though not shown, content reproducing apparatus 44 includes a CPU and an internal storage apparatus, and substantially, it is a computer.

Memory card 202 is a storage medium and capable of storing data as well as a computer program, which will be described later, for realizing various functions of content reproducing apparatus 44. When the computer program is executed by the CPU of content reproducing apparatus 44, various functions described below are realized.

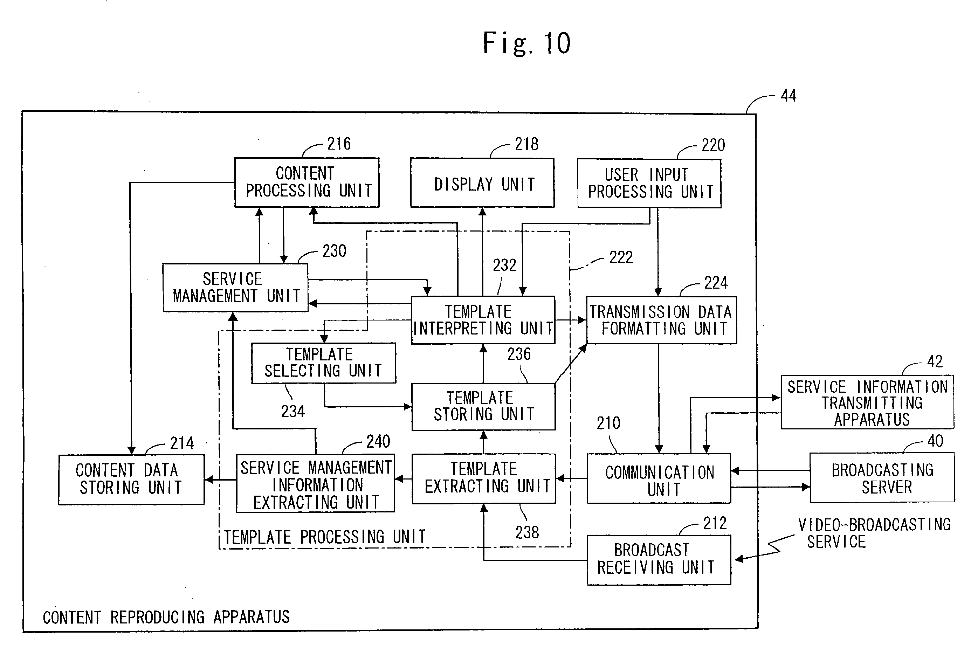

Fig. 10 is a functional block diagram of content reproducing apparatus 44. As can be seen from Fig. 10, content reproducing apparatus 44 includes: a communication unit 210 for communication with service information transmitting apparatus 42 and broadcasting server 44 through the Internet 46 (see Fig. 1); a broadcast receiving unit 212 for receiving video/broadcast services from broadcasting server 40; a display unit 218 and user input processing unit 220 forming the input/output unit 200 shown in Fig. 9; a template processing unit 222 processing information in the template forming the promotion information received by communication unit 210, to extract the service ID indicated by the promotion information from broadcasting server 40, to obtain key information for descrambling the corresponding broadcast program, and to control content view in accordance with the template; and a content processing unit 216 for descrambling the content data received by broadcast receiving unit 212, using the key received by template processing unit 222.

Content reproducing apparatus 44 further includes: a content data storing unit 214 for storing the content data descrambled by content processing unit 216; a transmission data formatting unit 224 for preparing a prescribed format of transmission data when various pieces of information generated in content reproducing apparatus 44 are to be transmitted to service information transmitting apparatus 42 or broadcasting server 40, and transmitting the thus formatted data through communication unit 210: and a service management unit 230 for storing the service ID extracted by template processing unit 222 in association with the key information for using the service.

Template processing unit 222 includes a template extracting portion 238 for extracting a template from the data received by communication unit 210 from service information transmitting apparatus 42. In the present embodiment, it is assumed that the template may be provided not only from service information transmitting apparatus 42 but also from broadcasting server 40 through the Internet, or over radio wave. Therefore, template extracting unit 238 also has a function of extracting a template from the data provided by broadcasting server 40 through the Internet or over the radio wave.

Template processing unit 222 further includes: a template storing unit 236 for storing a plurality of templates extracted by template extracting unit 238; a template interpreting unit 232 responsive to reception of a template reception notice from template storing unit 236, for selecting a template to be used from the templates stored in template storing unit 236 and processing the content in accordance with the selected template; and a template selecting unit 234 for controlling template storing unit 236 such that the template determined by template interpreting unit 232 is applied to template interpreting unit 232. Specifically, template interpreting unit 232 determines the template to be used automatically or by a user designation through user input processing unit 220 in accordance with an operation mode, from the templates stored in template storing unit 236. As will be described later, the operation mode includes an automatic mode, a semi-automatic mode and a manual mode. By interpreting the determined template, template interpreting unit 232 performs processes necessary for descrambling the content. Template interpreting unit 232 further controls display layout of the content, change of content view and the like on display unit 218, in accordance with the determined template.

Template processing unit 222 further includes a service management information extracting unit 240 for extracting the service ID, the key information and the content data, after the processing by template extracting unit 238 on the data received by communication unit 210. The content data extracted by service management information extracting unit 240 are stored in content data storing unit 214. The service ID and the key information are related to each other and stored in service management unit 230.

Receiving a request designating a service ID from template interpreting unit 232, service management unit 230 determines whether the corresponding key information exists or not, and if not, returns a negative acknowledgement (referred to as "NoKey acknowledgement") to template interpreting unit 232, and if there is the key, applies the corresponding key to content processing unit 216 so that the corresponding content are descrambled. Service management unit 230 further has a function of issuing, upon reception of service management information such as the key information, a service management information reception event to template interpreting unit 232.

As described above, template processing unit 222 processes the service related information included in the template, and controls various processing units of content reproducing apparatus 44 so that the content provided by the service is processed appropriately.

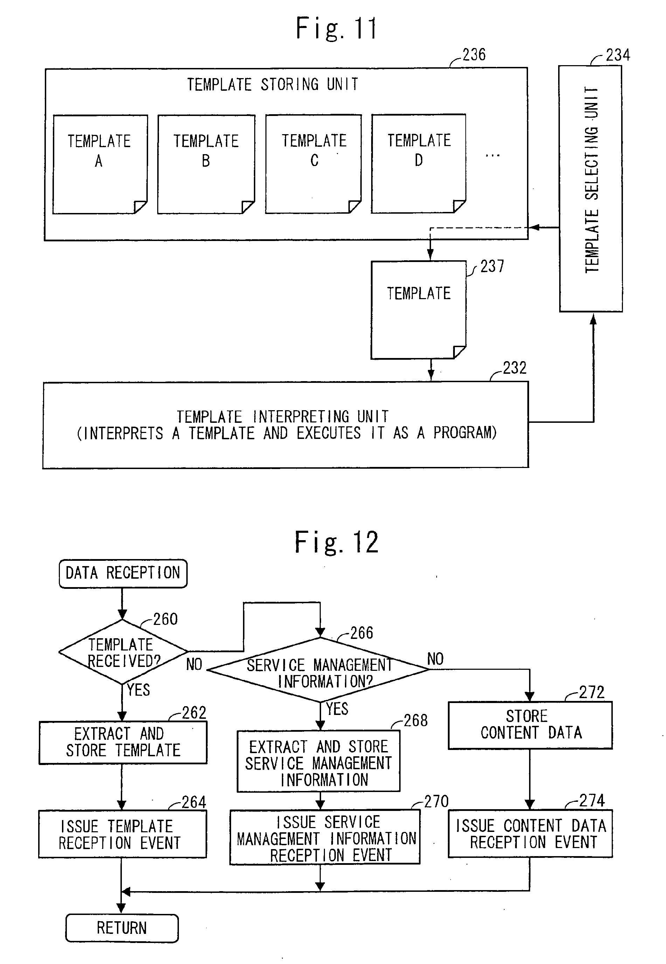

Fig. 11 shows a relation between the plurality of templates stored in template storing unit 236 and template interpreting unit 232. As can be seen from Fig. 11, template selecting unit 234 selects one of the templates stored in template storing unit 236, and applies it as template 237 to template interpreting unit 232. Template interpreting unit 232 is formed of a program for interpreting the description of the template, and for executing control and display in accordance with the description of the template, and it has a function of interpreting/executing the designated template among the templates stored in template storing unit 236. In the present embodiment, the template as a target of interpretation by template interpreting unit 232 at one time is a single template stored in template storing unit 236. Template interpreting unit 232 does not concurrently process a plurality of templates. When a template includes information of transition to another template, template interpreting unit temporarily switches to said another template, and processes the switched template. For an application to a news flash and the like, it may be necessary to provide pieces of auxiliary content information superposed in a single template. In that case, service information transmitting apparatus 42 superposes a plurality of pieces of content information including layout data in one single template, whereby the process can be executed by template interpreting unit 232 processing a single template. Service information transmitting apparatus 42 transmits the template as such to service reproducing server 44. By such configuration, even though template interpreting unit 232 processes only one template at one time, a plurality of auxiliary contents can substantially be processed.

In the present embodiment, template interpreting unit 232 interprets and executes the template in accordance with a setting of any one of the operational modes, that is, the automatic mode, semi-automatic mode and manual mode, when information including a template such as the promotion information is applied from the outside.

In the automatic mode, operation automatically makes a transition to the display based on a newly received template. In the semi-automatic mode, when information including a template is received, auxiliary content information (text or the like) included in the received template is displayed on a sub-window provided separate from the window of the main content. When there is a user instruction to display the new information, a confirmation image is displayed once for making a transition to another image. Upon confirmation by the user, the display is switched to the image based on the new template. In the manual mode, a plurality of templates stored in template storing unit 236 are displayed in a list to allow the user to select one therefrom, and control proceeds using the selected template. Details of operations in respective modes will be described later.

All the functions of broadcasting server 40, service information transmitting apparatus 42 and content reproducing apparatus 44 are assumed to be practically implemented by computer hardware and computer programs executed thereon. For data storage, a storage apparatus such as a memory or a hard disk is used. It is preferable that the storage is non-volatile. Alternatively, a volatile storage may be used provided that the stored memory can be retained by constant application of a backup power.

Functions of various portions of template processing unit 222 are also assumed to be implemented by computer hardware and computer programs executed thereon. Such programs are stored in a program memory, not shown, and executed by a central processing unit, not shown. Fig. 12 is a flow chart of the program for realizing various functions of template processing unit 222 of content reproducing apparatus 44 shown in Fig. 10, when content reproducing apparatus 44 receives data.

Referring to Fig. 12, the process flow at the time of data reception will be described. The program starts when communication unit 210 or broadcast receiving unit 212 receives data. In step 260, whether the received data is a template or not is determined. If the received data is a template (for example, promotion information), control proceeds to step 262, and otherwise, control proceeds to steps 266.

In step 262, template information is extracted by template extracting unit 238 from the received data, and stored in template storing unit 236. In step S264, a template reception event is issued, and the process ends. The event corresponds to the template reception notice applied from template storing unit 236 to template interpreting unit 232 in Fig. 10.

If it is determined in step 260 that the received data is not a template, whether the received data includes service management information or not is determined in step 266. The service management information includes a service designated by a service ID, key information for using the service, and information for service access permission. The service management information extracted in step 266 is not the template itself but information necessary for processing the service itself, and it is the service management unit 230 that is in charge of the processing. When it is determined that the received data includes the service management information, control proceeds to step 268, and otherwise, to step 272.

In step 268, the service management information is extracted from the received data (service management information extracting unit 240), and the extracted information is notified to and stored in service management unit 230. Further, in step 270, service management unit 230 notifies template interpreting unit 232 of the information in the form of a service management information reception event, and the process is terminated. The event corresponds to the service management information reception event applied from service management unit 230 to template interpreting unit 232 in Fig. 10.

If it is determined in step 266 that the received information is not the service management information, the received data is processed as the content data. In step 272, the received content data are stored in content data storing unit 214. In step 274, a content data reception event is issued to template interpreting unit 232 (not shown), and the process returns to the original flow.

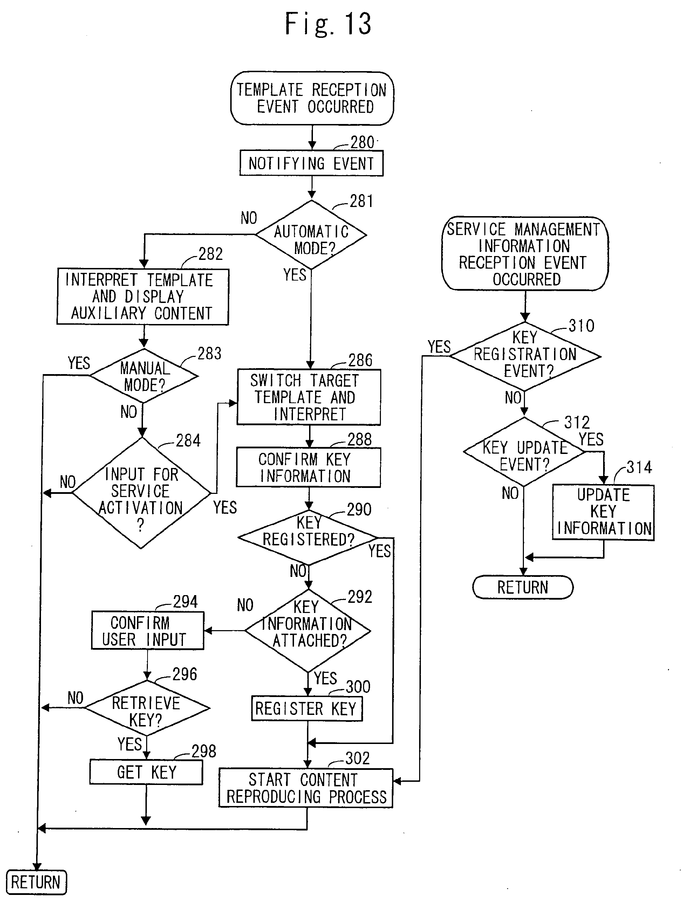

Fig. 13 is a flow chart of a process executed by template processing unit 222 under the control of template interpreting unit 232, when template interpreting unit 232 of Fig. 10 receives the template reception event or the service management information reception event.

Referring to Fig. 13, the process flow when the template reception event or the service management information reception event occurs will be described. When the template reception event occurs, first, a display is given in step 280 to notify the user of the occurrence of the template reception event, and thereafter, whether the operational mode of template interpreting unit 232 is the automatic mode or not is determined in step 281. If it is the automatic mode, control proceeds to step 286, and otherwise, it proceeds to step 282.

In step 282, the template is interpreted, and the auxiliary content is displayed in a subordinate manner. The manner of display is defined by the description in the layout data.

In the next step 283, whether the operational mode of template interpreting unit 232 is the manual mode or not is determined. If it is the manual mode, the control returns to the original flow. If the operational mode is not the manual mode, that is, the semi-automatic mode, the control proceeds to step 284.

In step 284, whether there is a service activation input (instruction to switch templates) from the user or not is determined. If there is no service activation input, the control returns to the original flow. Otherwise, the control proceeds to step 286.

In step 286, the template to be displayed is switched for the template that is being processed to the received one, and interpretation is made in accordance with the descriptions in the template as such. In step 288, service management unit 230 is asked to confirm whether or not the key information corresponding to the content information based on the service ID described in the template is stored in service management unit 230 shown in Fig. 10. In step 290, based on the reply from service management unit 230, whether the key information is stored in service management unit 230 or not is determined. If it is stored, control proceeds to step 302, and if not, it goes to step 292.

In step 292, whether the received template includes the key information or not is determined. If the key information for receiving the content service based on the service ID is not registered while the key information for that service is included in the template as the object of processing, control proceeds to step 300. In step 300, the key is registered with the service management unit 230 as the key information for using the content of the service ID, and control proceeds to step 302. Here, it is possible to descramble the content corresponding to the service ID designated by the template, using the key information registered in service management unit 230. Therefore, in step 302, content reproducing process starts, using the key information, in content processing unit 216. Thereafter, the control returns to the original flow.

If it is determined in step 292 that the key information is not included in the received template, the following process is performed, from step 294. First, in step 294, an image is displayed to the user, asking whether key information may be obtained to execute the processing of content based on the new template. In this image, a button representing agreement of the user (for example, "next" button) and a button representing denial (for example, "back" button) are displayed as UI elements, asking for a user input.

In step 296, whether the user input is an agreement or denial is determined. If it is an agreement, control proceeds to step 298. If it is a denial, control returns to the original process without any operation.

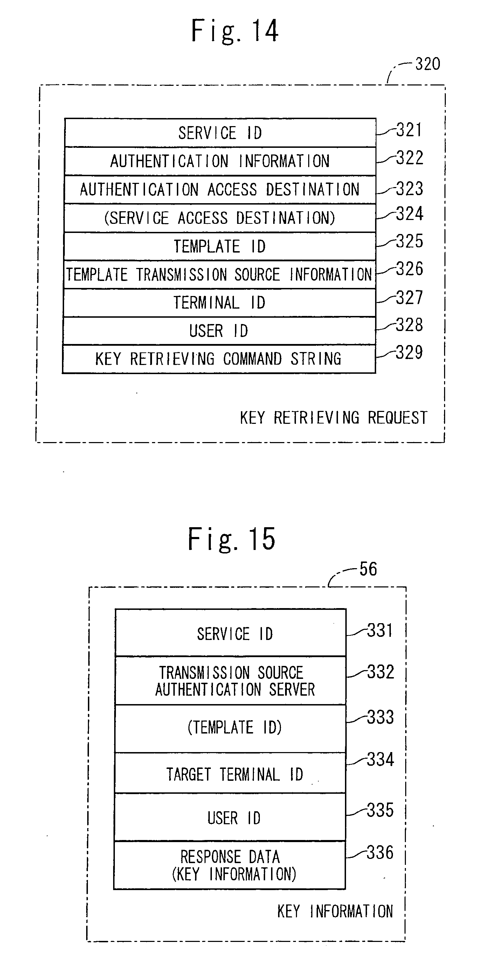

In step 298, service ID 150, authentication information 152, authentication access destination 154, template ID 158, template transmission source information 160 and key retrieving command string 162 are referred to from the main content reference information 141 of Fig. 6 included in the received template, and a key retrieving request is generated that includes a service ID 321, authentication information 322, authentication access destination 323, template ID 325, template transmission source information 326 and key retrieving command string 329, and in addition, a terminal ID 327 representing the content reproducing apparatus 44 and a user ID 328 as represented by key retrieving request 320 of Fig. 14. Further, key retrieving request 320 is transmitted to broadcasting server 40 indicated by the content of authentication access area 154 shown in Fig. 6. In addition, key retrieving request 320 may include a service access destination 324, which is obtained by referring to service access destination 156 of Fig. 6. After the process of key retrieving request, the control returns to the original flow.

Receiving the key retrieving request 320, broadcasting server 40 refers to the authentication information 322 of key retrieving request 320, and determines whether the key retrieving request 320 is from that content reproducing apparatus 44 which has received the promotion information transmitted from the already authenticated service information transmitting apparatus 42. If the condition is not satisfied, broadcasting server 40 transmits information denying authentication to content reproducing apparatus 44 that has sent the key retrieving request 320. If the condition is satisfied, broadcasting server 40 reads the key information for the content indicated by service ID 321 of key retrieving request 320 from key information DB 76 (see Fig. 3), forms service management information (which corresponds to key information 56 of Fig. 1) including the service ID, authentication server information, a terminal ID as the target of response, user ID and the result of response to the key request (key data), and transmits the thus formed information to content reproducing apparatus 44.

Fig. 15 shows the configuration of key information (service management information) 56. Key information 56 includes the above-described service ID 311, transmission source authentication server 332 as authentication server information, template ID 333, the above-described target terminal ID 334, user ID 335, and key information 336 as the result of response to key retrieving request 320. It is not always necessary to include the template ID that was included in the key obtaining information 320. That the template ID is not included means the service management information processing including registration of the key is performed by service management unit 230 (see Fig. 10), not under the control of template interpreting unit 232.

The data is received by communication unit 210 (see Fig. 10) of content reproducing apparatus 44, and when the service management information extracting unit 240 registers the service management information (including the key information) with the service management unit 230, service management information 230 issues a key registration event to template interpreting unit 232. The key registration event is one of the service management information reception events.

The process executed when template interpreting unit 232 receives the service information reception event is the process indicated as "service management information reception event occurred" on the right side of Fig. 13. Referring to the right side of Fig. 13, in step 310, whether the received service management information reception event is a key registration event or not is determined. If it is a key registration event, control proceeds to step 302, reproduction of content using the newly registered key is started, and then, control returns to the original flow. If it is a service management information reception event other than the key registration event, control proceeds to step 312. In step 312, whether the event is a key update event or not is determined. The key update event occurs when key refresh information is received from broadcasting server 44. If it is a key update event, the key information that corresponds to the refresh information related to the service is updated in step 314, and the control returns to the original flow. If the event is not the key update event, the control returns to the original flow without performing any operation on the content.

The control structure of the computer program for implementing the main portion of template processing unit 222 shown in Fig. 10 of content reproducing apparatus 44 is as described above.

### [Operation]

The broadcasting service providing system 30, of which configuration has been described with referent to Figs. 1 to 15, operates as follows.

Referring to Fig. 3, a provider authentication DB 72 stores in advance pre-shared information for authentication of the provider that operates service information transmitting apparatus 42. Similarly, in authentication information storing unit 108 of service information transmitting apparatus 42 shown in Fig. 4, the pre-shared information for authentication of broadcasting server 40 and a public key for verifying the signature are stored. It is assumed that auxiliary content, templates and subscriber information are respectively registered beforehand, with auxiliary content DB 94, template DB 98 and subscriber DB 116.

Referring to Fig. 4, when timer 112 reaches a prescribed time, service ID retrieving unit 110 forms a request 48 for transmitting broadcast service-related information corresponding to the service ID, using the authentication information stored in authentication information storing unit 108, and transmits the request to broadcasting server 40.

Referring to Fig. 3, receiving the transmission request 48, network interface 86 of broadcasting server 40 applies the request to service ID transmitting unit 74. Service ID transmitting unit 74 collates the provider related authentication information in transmission request 48 with the pre-shared information of the provider stored in provider authentication DB 72, to determine whether the transmission request 48 is transmitted from the service information transmitting apparatus 42 of a registered service provider or not. If authentication fails, broadcasting server 40 transmits information notifying the failure to service information transmitting apparatus 42. When authentication succeeds, broadcasting server 40 operates as follows.

First, service ID transmitting unit 74 extracts the broadcasting service-related information corresponding to the service ID (identification information) included in transmission request 48 from the service information DB, forms service ID information 50 including the access destination information for accessing the service and authentication information related to access permission for the service, and returns the thus formed information to service information transmitting apparatus 42.

Referring to Fig. 4, receiving the service ID information 50, network interface 106 applies the data to service ID retrieving unit 110. Service ID retrieving unit 110 stores the service ID, the access destination information for accessing the service and the authentication information related to access permission included in the received service ID information in service ID storing unit 104. Service ID retrieving unit 110 further stores other broadcasting service-related information through auxiliary content reception processing unit 92 to auxiliary content DB 94.

In response to updating of the content in service ID storing unit 104, promotion information control unit 115 executes the following process so that promotion information generating unit 100 forms promotion information DB 102. Specifically, for each of the newly updated services stored in service ID storing unit 104, promotion information control unit 115 determines, based on an operation by an operator, which of the templates stored in template DB 98 is to be used, and which of the auxiliary contents stored in auxiliary content DB 94 should be used. Based on the determination, promotion information generating unit 100 reads the template from template DB 98, stores the auxiliary content designated by the operator in a prescribed portion (area of auxiliary content of Fig. 5) of the template, and stores the service management information stored in service ID storing unit 104 in main content reference information 141, whereby the promotion information is formed.

Promotion information transmitting unit 118 repeats the following process for each registered user stored in subscriber DB 116, with reference to timer 112. Specifically, promotion information transmitting unit 118 selects a piece of promotion information that is considered suitable for transmission to the user at a time point indicated by timer 112, by checking promotion information DB 102. Here, information to be transmitted and information not to be transmitted are distinguished, based on the result of matching between preference information of each user registered in subscriber DB 116 and EPG indicating service attribute. Further, promotion information transmitting unit 118 determines whether or not there are a plurality of pieces of promotion information selected for each user. When there is a plurality of pieces, these pieces of information are put together using a template used exclusively therefor, so that the pieces of information are reconfigured as one single template. The thus generated promotion information is transmitted to the user through network interface 106. The destination is also obtained from subscriber DB 116. Consequently, even when there is a plurality of pieces of program information matching the user preference at the same time, the content reproducing apparatus 44 in accordance with the present embodiment can provide all the pieces of information to the user. When transmission of a piece of promotion information to a user has been completed, transmission complete information for the user is added.

Promotion information transmitting unit 118 executes this process for every user, and after a prescribed time period, again executes the same process, with reference to the timer 112. By continuously repeating this process, appropriate pieces of promotion information (matching the registered information) are transmitted at appropriate timing to each user.

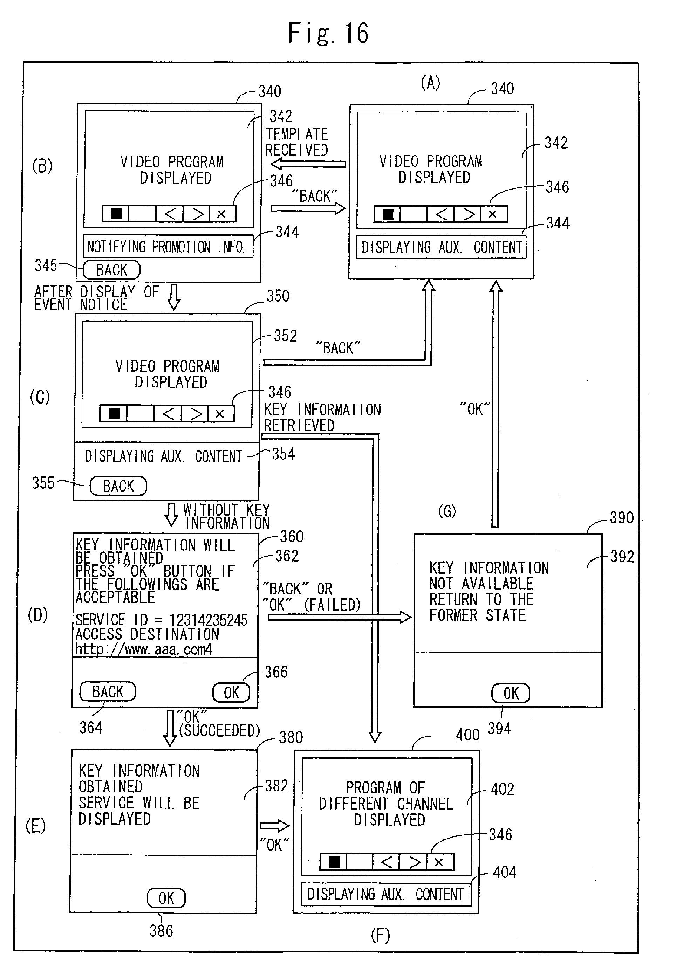

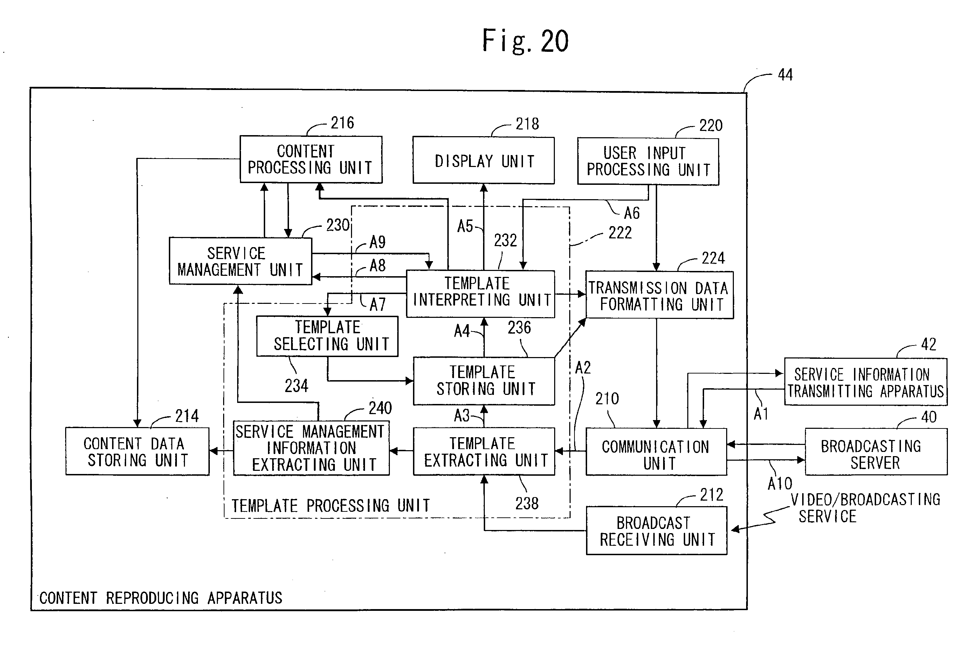

Referring to Figs. 10 and 20, transition of images on display unit 218 when communication unit 210 of content reproducing apparatus 44 receives the promotion information (A1 of Fig. 20) will be described. Base images are as shown in Figs. 16(A), 17(A) and 18(A). Figs. 16 to 18 represent image transitions of automatic operational mode, semi-automatic operational mode and manual operational mode, respectively.

First, the image transition in the automatic mode will be described. Referring to Fig. 16(A), on the upper half area 342 of a dialogue 340, a display (for example, video program display) related to the presently selected content is given, and on the lower area 344, data included in auxiliary content data of the content selected and displayed at present is displayed. At a position designated by the layout data of upper half area 342, a UI 346 generated based on the UI information described in the layout data is displayed.

When communication unit 210 of content reproducing apparatus 44 receives the promotion information (A1 of Fig. 20), communication unit 210 applies the same to template extracting unit 238 (A2 of Fig. 20). Template extracting unit 238 extracts the template from the promotion information, and applies it to template storing unit 236 (A3 of Fig. 20). Template storing unit 236 stores the template, and applies a template reception notice A4 to template interpreting unit 232.

In response to the notice, template interpreting unit 232 executes a process in accordance with the operational mode. Template interpreting unit 232 notifies the user of arrival of the new promotion information, using the display unit 218 (A5 of Fig. 20). This state is shown in Fig. 16(B). If the operational mode is automatic mode, on the upper half area 342 of dialogue 340, the display related to the content that has been selected so far is continuously given. On the lower area 344, content indicating reception of the template as the promotion information is displayed. Immediately after the display (or after a prescribed period of display), the display makes a transition to the dialogue 350 shown in Fig. 16(C). In Fig. 16(C), information representing the content of the newly received promotion information (for example, part of the text information included in the auxiliary content data) is displayed on the lower area 354. When a plurality of pieces of promotion information are included therein, auxiliary content data included in each piece of the promotion information are successively displayed on area 354. At this time, each auxiliary content data may be sequentially scrolled, or may be displayed in a cut-in manner for every prescribed time period. On dialogue 340 of Fig. 16(B) and, in addition, on dialogue 350 of Fig. 16(C), "back" buttons 345 and 355 are displayed, and by pressing the button 345 or 355 while the event of promotion information arrival is being notified, the display makes a transition to the one shown in Fig. 16(A).

After the state of Fig. 16(C), switching to the display of promotion information is automatically instructed (A6 of Fig. 20). This instruction is given to template interpreting unit 232. Template interpreting unit 232 extracts the template ID of promotion information, and applies it to template selecting unit 234 (A7 of Fig. 20). Template selecting unit 234 controls template storing unit 236, and passes the corresponding template to template interpreting unit 232.

In response, template interpreting unit 232 extracts the service ID from the promotion information and applies it to service management unit 230, and asks whether there is corresponding key information or not (A8 of Fig. 20). When there is the key information corresponding to the applied service ID, service management unit 230 applies a response to template 232 accordingly (A9 of Fig. 20). At the same time, the key is passed to content processing unit 216. When the key information does not exist, service management unit 230 returns a NoKey response to template interpreting unit 232 (A9 of Fig. 20).

When the key information exists, template interpreting unit 232 instructs content processing unit 216 to start reproduction of the content. Meanwhile, the video/broadcasting service content received by broadcast receiving unit 212 is stored through template extracting unit 238 and service management information extracting unit 240 to content data storing unit 214. Content processing unit 216 starts descrambling of the content corresponding to the service ID, among the contents stored in content data storing unit 214, using the key information applied from service management unit 230. The image here corresponds to the content reproduction dialogue 400 shown in Fig. 16(F), and reproduction of new content starts.

Content reproduction dialogue 400 includes an area 402 that displays a program of a different channel corresponding to the content of which key information has been obtained, and an area 404 that displays auxiliary content of the content, obtained from the template of the promotion information. A UI 346 is displayed on area 402. When new promotion information is obtained in this state, the display makes a transition to one similar to Fig. 16(A).

When the NoKey response is returned to template interpreting unit 232, template interpreting unit 232 once displays the dialogue 360 shown in Fig. 16(D). On dialogue 360, together with a confirmation message 362 notifying that the key information is to be obtained, the service ID of the object of processing and the access destination are displayed. Further, a "back" button 364 and an "OK" button 366 are displayed on dialogue 360. When "back" button 364 is pressed, the image makes a transition to dialogue 390 shown in Fig. 16(G). When "OK" button 366 is pressed, template interpreting unit 232 forms a key retrieving request 54 (see Fig. 1) using the corresponding service ID, and applies it to broadcasting server 40 through transmission data preparing unit 224 and communication unit 210 (A10 of Fig. 20). At this time, the service ID 150 and authentication information (see Fig. 6) included in the promotion information are set in key information request 54.

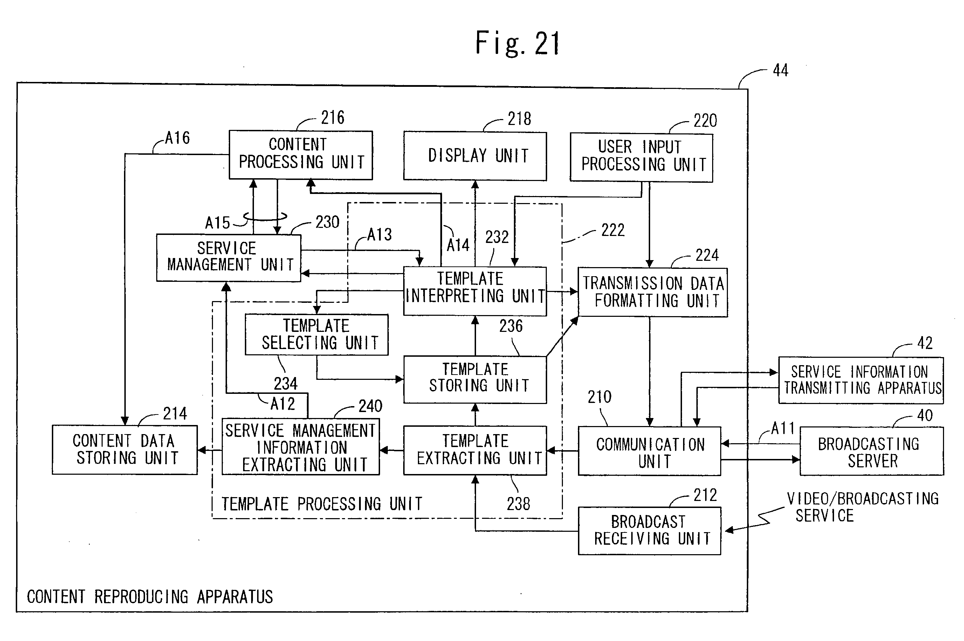

Referring to Fig. 21, when authentication for key information request 54 succeeds, broadcasting server 40 reads the key information corresponding to the designated service ID from key information DB 76, and returns the same as service management information to content reproducing apparatus 44 (A11 of Fig. 21). The service management information is applied through communication unit 210, template extracting unit 238 and service management information extracting unit 240 to service management unit 230, and stored (A12 of Fig. 21). At this time, service management unit 230 generates a service key registration event, and applies it to template interpreting unit 232 (A13 of Fig. 21).

In response to this event, template interpreting unit 232 displays the confirmation dialogue 380 of Fig. 16(E). Confirmation dialogue 380 includes a message 382 notifying start of service and an "OK" button 386. When "OK" button 386 is pressed, template interpreting unit 232 activates the content reproducing process, controlling the content processing unit 216 (A14 of Fig. 21). When the content reproducing process is activated, first, content processing unit 216 obtains the key information necessary to reproduce the content, by the interaction (A15 of Fig. 21) with the service management unit 230. Of the contents stored in content data storing unit 214, one designated to be reproduced is descrambled using the key information, and reproduction starts. As a result, content reproduction image 400 shown in Fig. 16(F) appears. Broadcasting server 40 transmits information for appropriately performing key updating process to formally registered content reproducing apparatus 44, and service management unit 230 stores therein the key information included in the transmitted information, whereby the descrambling key for the content of formally subscribed service is automatically updated. This means that in a content reproducing apparatus 44 that is not yet registered for subscription with broadcasting server, descrambling of the content becomes impossible after a prescribed time period. Thus, a method of distributing content that is effective only for a prescribed time period can be realized.

When "OK" button 366 is pressed on the image display of Fig. 16(D), key retrieving request 54 is formed and transmitted to broadcasting server 40 and nevertheless, authentication failed, the display makes a transition to a dialogue 390 of Fig. 16(G).

Dialogue 390 includes a message 392 indicating that key information was not available, and an "OK" button 394. When button 394 is pressed, the display returns to dialogue 340 of Fig. 16(A).

Screen transitions in the content reproducing apparatus 44 in the automatic operational mode in accordance with the first embodiment are as described above.

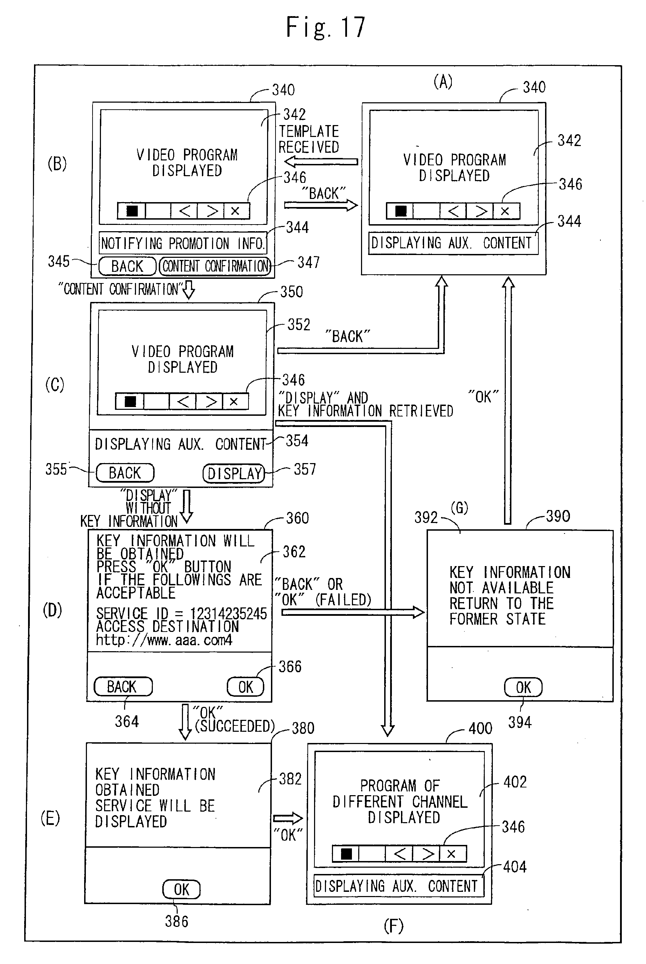

Fig. 17 shows an example of screen transition in content reproducing apparatus 44 in the semi-automatic mode. Referring to Fig. 17, the screen transition here is basically the same as that of Fig. 16. Different from the automatic mode, however, in dialogue 340 of Fig. 17(B), a "content confirmation" button 347 is displayed in addition to "back" button 345, and the state of Fig. 17(B) is maintained until either of the buttons is pressed. When "content confirmation" button 347 is pressed, the display makes a transition for the first time to dialogue 350 of Fig. 17(C).

Further, different from Fig. 16(C), dialogue 350 of Fig. 17(C) includes, in addition to "back" button 355, a "display" button 355. Here again, transition to another dialogue does not occur until either of the buttons is pressed. Content reproducing apparatus 44 tries to obtain the key information when button 357 is pressed. If the key information has already been obtained or when the key information is successfully obtained newly, display proceeds to dialogue 400 of Fig. 17(F), and otherwise, to dialogue 360 of Fig. 17(D).

Except for these points, screen transition in the semi-automatic mode is the same as that in the automatic mode.

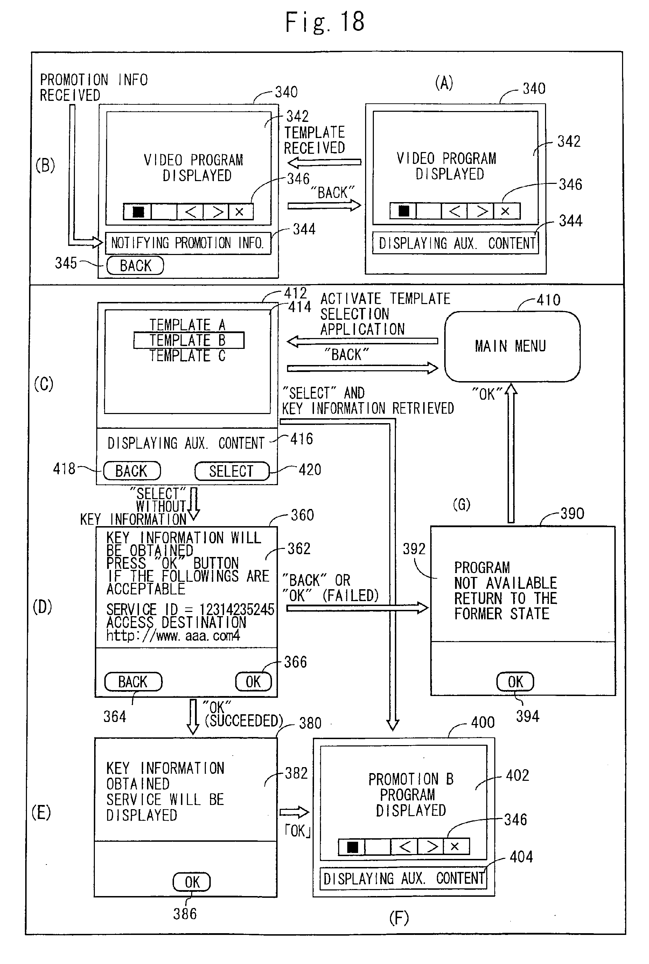

Fig. 18 shows screen transition in the manual mode. In the manual mode, generally, dialogue 340 of Fig. 18(A) is displayed, and when the promotion information is received, the display makes a transition to the one shown in Fig. 18(B). Specifically, in area 344, an event notice indicating arrival of the promotion information is displayed. Further, a "back" button 345 is also displayed. In the manual mode, the state shown in Fig. 18(B) is maintained until the "back" button 345 is pressed, and when "back" button 345 is pressed, the display returns to the one shown in Fig. 18(A).

In the manual mode, template selection is performed by manually activating a dedicated application from a general menu 410, which is displayed switched from dialogue 340. A dialogue 412 after activation of the application is as shown in Fig. 18(C). Dialogue 412 has a list of available templates, and includes a display 414 allowing the user to select one from the list, an area 416 for displaying auxiliary content, a "back" button 418 and a "select" button 420.

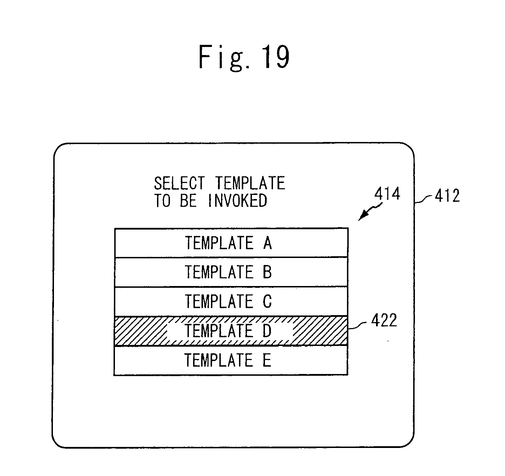

Fig. 19 shows an example of dialogue 412 when template interpreting unit 232 asks the user to select a template, in the manual mode. For simplicity of drawings, area 416 is omitted in Fig. 19. In Fig. 19, dialogue 412 has templates stored in template selecting unit 234 displayed as a list 414, allowing the user to select an arbitrary one (for example, template 422). For this selection, an interactive process is performed, using the display unit 218 and user input processing unit 220.

Again referring to Fig 18(C), when button 418 is pressed on dialogue 412, the display returns to the general menu 410. When button 420 is pressed, whether the key information has been already obtained or not is determined. If it has been obtained, the display makes a transition to dialogue 400 shown in Fig. 18(F). Dialogue 400 of Fig. 18(F) represents the content corresponding to the promotion information, similar to Fig. 16(F).

When the key information is not yet obtained, the display makes a transition to dialogue 360 shown in Fig. 18(D). The screen transition thereafter is the same as that shown in Figs. 16 and 17, and therefore, detailed description will not be repeated here.

The operations of broadcasting service information providing system 30 and broadcasting server 40, service information transmitting apparatus 42 and content reproducing apparatus 44 included in broadcasting service information providing system 30 are as described above.

The validity period of key information may be managed by template interpreting unit 232. In that case, if the key information has been obtained based on the promotion information, template interpreting unit 232 transmits an instruction for discarding the key information after expiration of the validity period, to service management unit 230. For the key information for formal subscription and not obtained through promotion information, automatic updating process is performed between service management unit 230 and broadcasting server 40, without involving template interpreting unit 232, and when the validity period expires, the key information is updated automatically.

As described above, by the broadcasting service information providing system 30 of the present embodiment, the promotion information is transmitted from service information providing apparatus 42 to content reproducing apparatus 44. The promotion information includes reference information to the main content, and sub-content data including layout information and the like for displaying the promotion information on content reproducing apparatus 44. Receiving the promotion information, content reproducing apparatus 44 accesses the authentication access destination included in the promotion information, using the service ID and authentication information included in the promotion information, so that key information necessary for reproducing the content can be obtained. The user can watch the content corresponding to the promotion information without any troublesome operation for obtaining the key information separately.

As the validity period of key information is controlled, the content cannot be viewed after expiration. Thus, profits of the content provider are not undermined. For the operator of service information transmitting apparatus 42, it is possible to introduce the program that will be broadcast from broadcasting server 40 to many people, so that many people try to take a look through simple operation. The operator of service information transmitting apparatus 42 may be a content provider, one who may profit from selling the content, or simply one wishing to introduce the content to as many people as possible. In any case, this system is advantageous to the operator of broadcasting server 40, operator of service information transmitting apparatus 42 and user of content reproducing apparatus 44.

In the embodiment above, promotion information 52 includes authentication information (see Fig. 6) used when content reproducing apparatus 44 accesses the broadcasting server 40. As the key information request 54 is authenticated by broadcasting server 40 using the authentication information, only the content reproducing apparatus 44 that has received promotion information 52 from a prescribed service information transmitting apparatus 42 can obtain the key information. The present invention, however, is not limited to such an embodiment. Such authentication may not be performed, in order to dissipate the information of broadcasting service widely among the users. In that case, it is unnecessary to include the authentication information in the promotion information 52. Further, it is also unnecessary to include the authentication information in key information request 54.

### <Second Embodiment>

In the system of the first embodiment, the promotion information provided from service information transmitting apparatus 42 to content reproducing apparatus 44 does not include the key information and content reproducing apparatus 44 obtains the key information from broadcasting server 40. The present invention, however, is not limited to such an embodiment. By way of example, service information transmitting apparatus 42 may obtain the key information corresponding to the service ID designated in the promotion information from broadcasting server 40, and may transmit the key information to content reproducing apparatus 44 as a part of the promotion information. In that case, it is convenient to set a validity period of the key information attached to the promotion information and to facilitate the procedure to obtain the formal key information at the expiration of validity period.

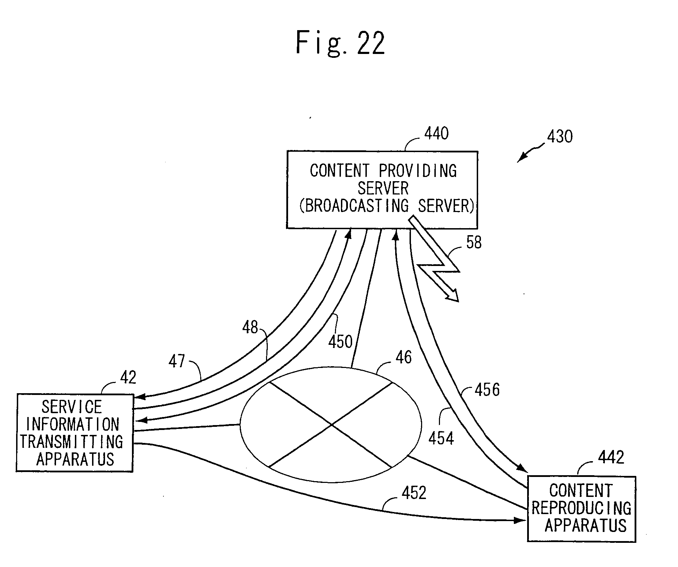

Fig. 22 schematically shows a broadcasting service information providing system 430 in accordance with the present invention, which realizes the above approach. Referring to Fig. 22, broadcasting service information providing system 430 includes: a broadcasting server 440, a service information transmitting apparatus 42 and a content reproducing apparatus 442 having a function of obtaining the formal key information by accessing broadcasting server 440 through a simple operation by the user at the expiration of validity period of the key information attached to the promotion information, that can communicate with each other through the Internet 46. In Fig. 22, components that are the same as those shown in Fig. 1 are denoted by the same reference characters. They have the same names and functions.

In this embodiment also, it is assumed that service information transmitting apparatus 42 has already obtained the EPG 47 from broadcasting server 440. When a transmission request 48 is transmitted from service information transmitting apparatus 42 to broadcasting server 440, broadcasting server 440 returns to service information transmitting apparatus 42, service ID information 450, which is similar to service ID 50 shown in Fig 1 but additionally includes key information necessary for reproducing content corresponding to the service ID. Service information transmitting apparatus 42 forms promotion information 452 based on the service ID information 450 as such, and transmits the same to content reproducing apparatus 442. The data format of promotion information 452 is the same as the data format of promotion information 52 of the first embodiment. Receiving the promotion information 452, the content reproducing apparatus 442 can descramble and reproduce the content distributed over broadcasting wave 58 from broadcasting server 440 without the necessity of accessing to broadcasting server 440 and receiving the key information, as the key information is included in the promotion information.

The key information has a validity period, and when the validity period expires, it becomes impossible for the content reproducing apparatus 442 to reproduce the content distributed over the broadcasting wave 58. In that case, content reproducing apparatus 442 transmits a registration procedure request 454 for subscription for formal service, to broadcasting server 440 to obtain the formal key information. Broadcasting server 440 executes registration in response to registration procedure request 454, and transmits the key information 456 to content reproducing apparatus 442. Thus, content reproducing apparatus 442 can descramble and reproduce the content transmitted over broadcasting wave 58, using the key information 456. The key information for descrambling the content is modified periodically, and broadcasting server 440 transmits new key information to registered subscriber (refreshes the key information), whereby the registered subscriber (user) can always descramble and reproduce the content.

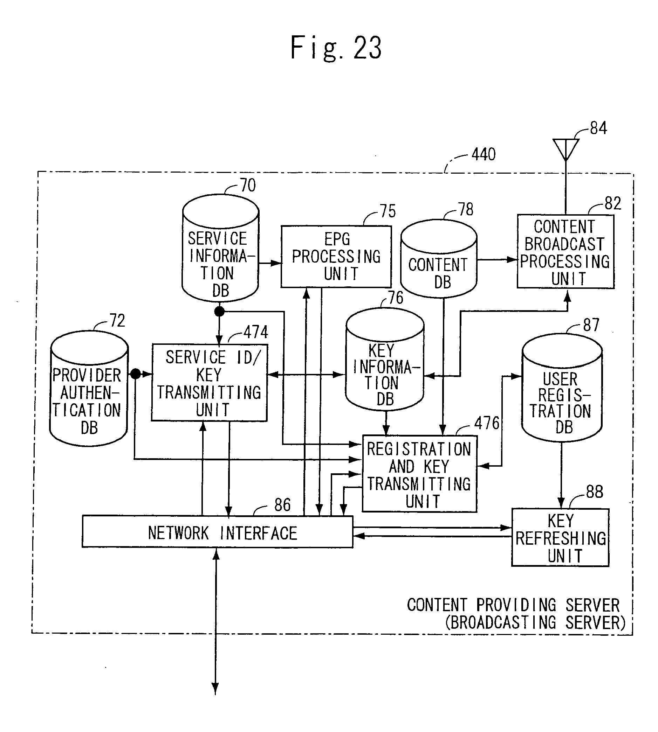

Fig. 23 is a block diagram of broadcasting server 440. Referring to Fig. 23, broadcasting server 440 includes, similar to broadcasting server 40 shown in Fig. 3, service information DB 70, provider authentication DB 72, content DB 78, content broadcast processing unit 82, EPG processing unit 75, key information DB 76, network interface 86, user registration DB 87 and key refreshing unit 88. It is noted, however, that in place of service ID transmitting unit 74 shown in Fig. 3, broadcasting server 440 includes a service ID/key transmitting unit 474 that has a function different from service ID transmitting unit 74 in that service ID information 450 to be transmitted to service information providing apparatus 42 is set to include not only the content service ID and corresponding service management information but also key information for descrambling the content. Further, broadcasting server 440 includes, in place of key transmission processing unit 80 shown in Fig. 3, a registration and key transmission processing unit 476 that registers, in response to reception of a registration procedure request 454 from content reproducing apparatus 442 through network interface 86, the information related to the user terminal that has transmitted the request with user registration DB 87 and returning key information 456 related to the requested program to the terminal. Except for these points, the configuration of broadcasting server 440 is similar to that of broadcasting server 40.

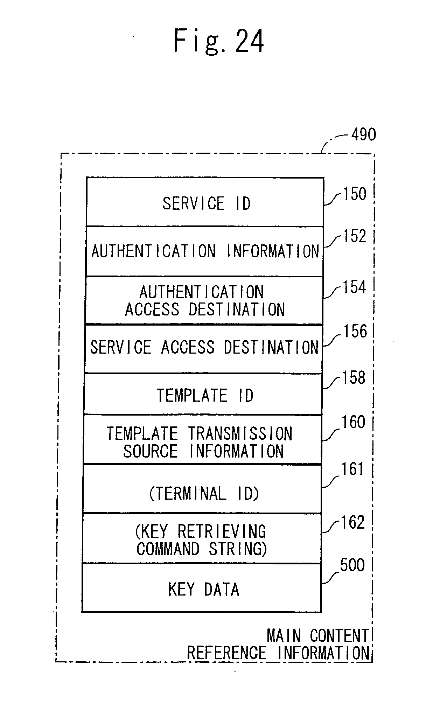

Fig. 24 shows a configuration of main content reference information 490 included in the promotion information transmitted from service information transmitting apparatus 42. Referring to Figs. 24 and 6, the same portions are denoted by the same reference characters. As shown in Fig. 24, main content reference information 490 includes, in place of key data area 164 that was empty in main content data 140 of Fig. 6, a key data area 500 that actually stores the key data for descrambling the content. Further, main content reference information 490 includes an area 161 of terminal ID that becomes necessary when a formal subscription for the service is registered, as will be described later.

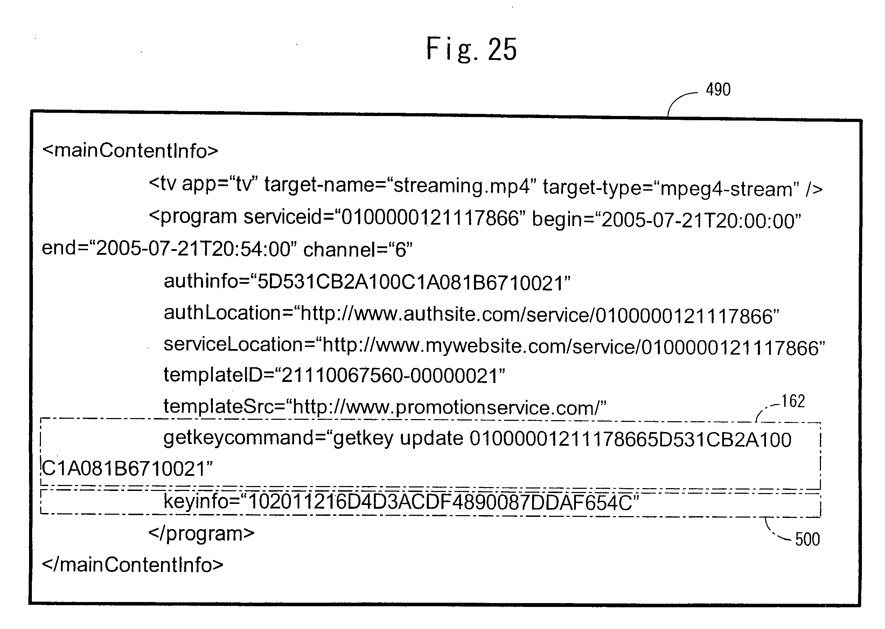

Fig. 25 shows an example of main content reference information 490. Main content reference information 490 shown in Fig. 25 is described in XML, and includes various pieces of information between tags. The configuration of information shown in Fig. 25 is similar to that shown in Fig. 8 except that a key information updating command is described in key retrieving command string area 162 and that key information with validity period for descrambling the content is stored in key data area 500. When the key information updating command and the information specifying the content reproducing apparatus 442 are transmitted as registration procedure request 454 shown in Fig. 22 to broadcasting server 440, broadcasting server 440 registers the terminal ID of content reproducing apparatus 442 as an apparatus of formal subscriber with user registration DB 87. As the key information updating command is described in key retrieving command string area 162, the procedure for transmitting the registration procedure request 454 can be done reliably.

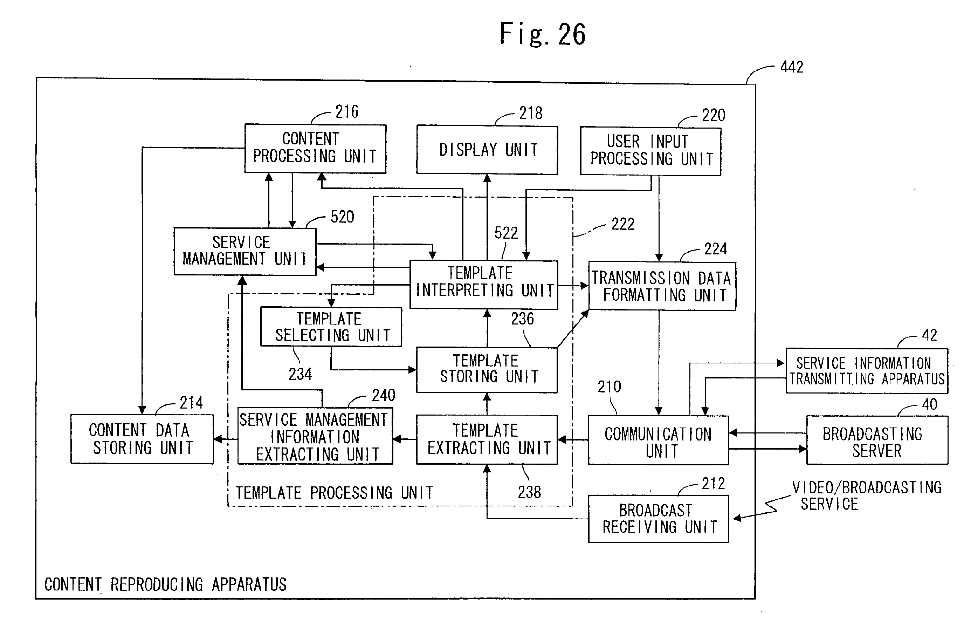

Referring to Fig. 26, the schematic configuration of content reproducing apparatus 442 in accordance with the second embodiment is similar to that of service reproducing apparatus 44 in accordance with the first embodiment shown in Fig. 10. Content reproducing apparatus 442, however, is different in that it includes, in place of service management unit 230 shown in Fig. 10, a service management unit 520 having a function of storing the service ID and the corresponding key information in association with each other and issuing, when validity period of the key information expires, a key expiration event. Further, content reproducing apparatus 442 includes, in place of template interpreting unit 232 shown in Fig. 10, a template interpreting unit 522 having, in addition to the functions of template interpreting unit 232, a function of asking the user whether formal registration should be made or not in response to reception of the key expiration event from service management unit 520, and when instructed to register, transmitting the key information updating command included in the key retrieving command string area 162 of the template and the terminal ID related to content reproducing apparatus 442 as registration procedure request 454 to broadcasting server 40. Key information 456 transmitted from broadcasting server 40 in response to registration procedure request 454 is passed through communication unit 210, template extracting unit 238 and service management information extracting unit 240 to service management unit 520, and stored together with the corresponding service ID.

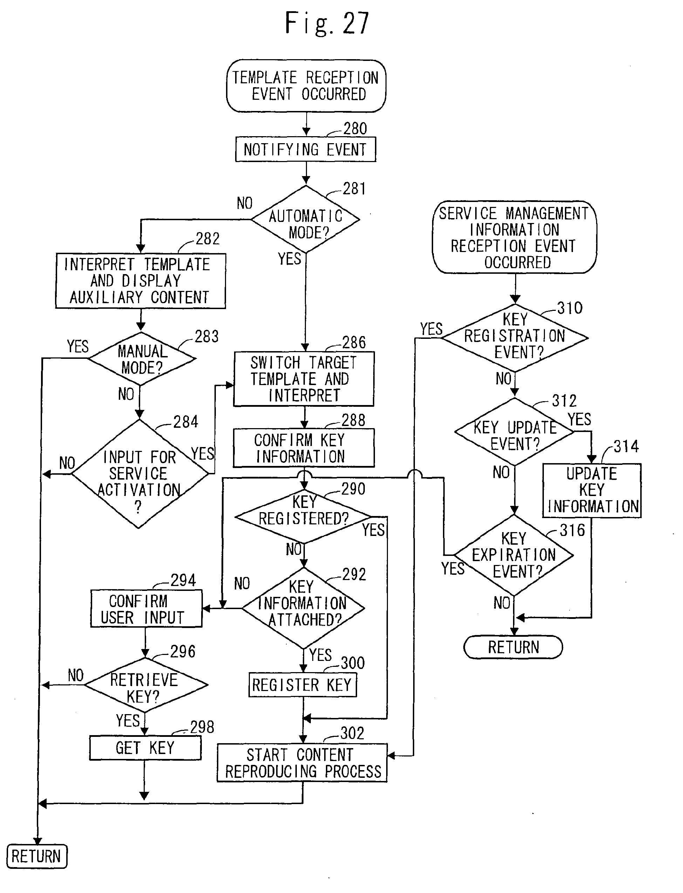

The functions of content reproducing apparatus 442 as described above can substantially be implemented by computer hardware and computer programs, similar to service reproducing apparatus 44 in accordance with the first embodiment. Fig. 27 is a flow chart of the computer program.

The flow chart of Fig. 27 is almost the same as that of Fig. 13, except that, as the process when the service management information reception event occurs, a step 316 is added after steps 310 to 314.

Referring to Fig. 27, if it is determined in step 310 that the received event is a key registration event, the process proceeds to step 302. This is the same as in Fig. 13. If the received event is not the key registration event, control proceeds to step 312. In step 312, whether the event is a key updating event or not is determined. If the event is the key updating event, the key information of the corresponding service ID is updated by a refresh operation in step 314, and the control returns to the original flow. If the event is not the key updating event, control proceeds to step 316. In step 316, whether the event is the key expiration event or not is determined. If it is the key expiration event, control proceeds to step 294. Otherwise, the control returns to the original flow without any operation on the content. If the user is a formally registered subscriber, the key expiration event never occurs during reproduction of the corresponding content. The key expiration event occurs, for example, when promotion information including key information with validity period is received and the content is viewed using the key information.

When the process proceeds from step 316 to step 294, what is executed in steps 294 to 298 is the process of issuing the formal service registration procedure request.

In the present embodiment, when promotion information with key information is received, the key is registered with service management unit 520 in step 300. At this time, status information indicating that the key has a validity period, that is, the key is a temporary key, is added to the key.

Referring to Fig. 22, broadcasting service information providing system 430 in accordance with the second embodiment of the present invention operates in the following manner. Service information transmitting apparatus 42 obtains the EPG 47 from broadcasting server 440 in advance, and stores the content information in auxiliary content DB 94 (Fig. 4). Service information transmitting apparatus 42 transmits a transmission request 48 to broadcasting server 440.

Referring to Fig. 23, service ID/key transmitting unit 474 of broadcasting server 440 receives the transmission request 48 through network interface 86, and authenticates the provider as the source of transmission request 48 through provider authentication DB 72. If authentication succeeds, service ID/key transmitting unit 474 extracts the service information related to the content (to be broadcast), held in service information DB 70. Further, service ID/key transmitting unit 474 extracts, from key information DB 76, key information with validity period for descrambling the extracted content, and returns the service information and the corresponding key information together as service ID information 450, to service information transmitting apparatus 42. Specifically, service ID information 450 includes not only the service ID and service related information of contents but also the key information for descrambling the content.

After receiving the service ID information 450, service information transmitting apparatus 42 forms the promotion information. The promotion information formed here is almost the same as that of the first embodiment, except that it additionally includes the key information for descrambling the content.

When it comes to a good time to transmit the promotion information, service information transmitting apparatus 42 transmits the promotion information 452 to the registered user. Different from the first embodiment, the promotion information 452 includes the key information. Except for this point, the operation of service information transmitting apparatus 42 is the same as that in the first embodiment.

Referring to Fig. 26, receiving the promotion information, content reproducing apparatus 442 operates in the following manner. When communication unit 210 receives the promotion information, communication unit 210 applies the information to template extracting unit 238. Template extracting unit 238 extracts a template from the promotion information, and applies the same to template storing unit 236. Template storing unit 236 stores the template, and applies a template reception notice to template interpreting unit 522. Further, service management information extracting unit 240 extracts the service ID information and the key information from the promotion information, and applies these to service management unit 520. Service management unit 520 stores the service ID information and the key information in association with each other.

Template interpreting unit 522 operates in accordance with the operational mode, in response to the template reception notice. Template interpreting unit 522 notifies the user of the arrival of new promotion information, using display unit 218. Assuming that the operation is in the automatic mode, the image displayed here is the same as that of Fig. 17(B). On the upper half area 342 of dialogue 340 shown in Fig. 17(B), a display related to the content that have been selected by that time is given, and on the lower area 344, information representing the notice of promotion information is displayed. When the user presses the content confirmation button 347, the process of switching to auxiliary content display is executed, and the display image makes a transition to dialogue 350 shown in Fig. 17(C). When the promotion information includes a plurality of pieces of information, auxiliary content data included in respective pieces of promotion information are successively displayed on area 354. When the user selects a text related to any of the pieces of promotion information using input processing unit 220, a switching instruction for switching to the promotion information corresponding to the selected auxiliary content information is applied from user input processing unit 220 to template interpreting unit 522. Template interpreting unit 522 extracts the template ID from promotion information and applies the same to template selecting unit 234. Template selecting unit 234 controls template storing unit 236 so that the corresponding template is passed to template interpreting unit 522.

In response, template interpreting unit 522 extracts the service ID from the promotion information and applies to service management unit 520, asking whether the corresponding key information exists or not. If the key information corresponding to the applied service ID exists, service management unit 520 applies a response to that effect to template interpreting unit 522 and passes the key to content processing unit 216. In the present embodiment, the promotion information includes the key with validity period, and the key information is stored in service management unit 520. Service management unit 520 passes the key information to content processing unit 216.

As the key information exists, template interpreting unit 522 designates the service ID corresponding to the promotion information and instructs reproduction of content to content processing unit 216, while the content of video/broadcasting service received by broadcast receiving unit 212 are stored in content data storing unit 214 through template extracting unit 238 and service management information extracting unit 240. Content processing unit 216 starts descrambling of the content corresponding to the applied service ID among the contents stored in content data storing unit 214, using the key information applied from service management unit 520. As a result, reproduction of content corresponding to the promotion information starts.

When the validity period of the key information expires, service management unit 520 issues a key expiration event to template interpreting unit 522. Descrambling of content by content processing unit 216 is disabled. Template interpreting unit 522 displays a dialogue similar to dialogue 360 shown in Fig. 17(D), asking whether a formal registration should be made or not. When "OK" button 366 is pressed, template interpreting unit 522 forms the registration procedure request 454 (see Fig. 22) using the service ID, key retrieving command string included in the promotion information, and the terminal ID of the content reproducing apparatus 442, and applies the request through transmission data formatting unit 224 and communication unit 210 to broadcasting server 440. Here, the format of registration procedure request 454 is the same as the format of main content reference information 490 shown in Fig. 24, and includes the service ID 150 included in the promotion information, authentication information 152, key retrieving command string 162, terminal ID 161 (see Fig. 24) and so on.

Referring to Fig. 23, registration and key transmission processing unit 476 of broadcasting server 440 performs the authentication process on the registration procedure request 454, with reference to provider authentication DB 72. When authentication succeeds, registration and key transmission processing unit 476 registers the designated service ID and the terminal ID of the content reproducing apparatus 442 included in the registration procedure request 454 with user registration DB 87. Further, the key information corresponding to the service ID is read from key information DB 76 and returned, together with the service ID, as service management information to content reproducing apparatus 442.

Referring to Fig. 26, the service management information is applied through communication unit 210, template extracting unit 238 and service management information extracting unit 240 to service management unit 520. Service management unit 520 stores the service ID and the key information included in the service management information, in association with each other. At this time, service management unit 520 issues a service key registration event, to template interpreting unit 522.

In response to the event, template interpreting unit 522 displays a confirmation dialogue 380 similar to that shown in Fig. 17(E). Confirmation dialogue 380 includes a message 382 notifying start of service and an "OK" button 386. When "OK" button 386 is pressed, template interpreting unit 522 activates the content reproducing process by the content processing unit 216, designating the service ID. After activating the content reproducing process, content processing unit 216 first obtains the key information necessary for reproducing the content, through an interaction with the service management unit 520. Among the content stored in content data storing unit 214, one corresponding to the designated ID is descrambled using the key information, and reproduction starts.

The key refreshing unit 88 of broadcasting server 440 shown in Fig. 23 transmits key updating information for performing a key updating process appropriately, to service reproducing apparatus 442 formally registered for the service, with reference to user registration DB 87. Receiving the key updating information, service management unit 520 shown in Fig. 26 automatically updates the key for descrambling the content for the formally subscribed service, by newly storing the key information included in the updating information.

As described above, according to the second embodiment, the promotion information 452 transmitted from service information transmitting apparatus 42 to content reproducing apparatus 442 includes the key information with validity period, for descrambling the content. The service reproducing apparatus 442 can descramble the content of the broadcasting service provided by the broadcasting server 440 without the necessity to access the broadcasting server 440, and the user can immediately check the content. The key information is available only to the content reproducing apparatus 442 that received the promotion information 452, and therefore, information can be delivered only to the intended users. Further, the key information is managed by service management unit 230 of content reproducing apparatus 442 and after expiration of the validity period, it becomes unavailable unless formal registration is done. Therefore, profits of the operator of broadcasting server 440 are not undermined. When the validity period of key information expires, it is possible to reliably register formal subscription through a simple operation by the user on content reproducing apparatus 442. Therefore, it is possible for the user to continuously enjoy the service of his or her interest by a simple procedure. Use of the promotion information leads to increasing of the number of subscriptions, which is also advantageous to the service provider.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

### Industrial Applicability

The present invention maybe used in an information providing service system realized in cooperation with broadcasting service utilizing a network, and in various contents reproducing apparatuses used in such systems.

## Claims

1. A content reproducing apparatus, for reproducing content provided by a content providing server, comprising:
content processing means for applying a prescribed process to content;
communication means for providing communication using a prescribed network; and
service-related information processing means for receiving and processing service-related information including service identifying information identifying said content service and prescribed information related to the content service identified by said service identifying information from said prescribed network through said communication means, and for controlling said content processing means such that the content processing means processes the content identified by the received service identifying information using the received service-related information.

2. The content reproducing apparatus according to claim 1, wherein
the content provided by said content providing server may require prescribed key information for processing;
said content reproducing apparatus further comprising service management means for managing a set of the service identifying information of said content service and the key information; wherein
said content processing means includes means for obtaining, when the service identifying information is applied, the corresponding key information from said service management means for processing the content designated by said service identifying information;
said service-related information processing means includes
means for determining whether the key information for processing the content provided by the content service identified by the service identifying information received by said service-related information receiving means exists in said service management means or not, and
key information obtaining means responsive to a determination by said determining means that the key information does not exist in said service management means, for obtaining the key information corresponding to the content service identified by said service identifying information using said service-related information and applying the key information to said service management means; whereby
processing of the content of which key information does not exist in said service management means becomes possible.

3. The content reproducing apparatus according to claim 2, wherein
said prescribed information includes access destination information indicating an access destination to obtain the key information required for processing the content provided by the content providing server identified by said service identifying information; and
said key information obtaining means includes means responsive to a determination by said determining means that the key information does not exist in said service management means, for obtaining the key information corresponding to the content service identified by said service identifying information by transmitting the service identifying information included in said service-related information to the access destination indicated by said access destination information included in said service-related information through said communication means.

4. The content reproducing apparatus according to claim 3, wherein
said prescribed information further includes authentication information for authentication at the time of an access to said access destination; and
said means for obtaining key information includes means responsive to a determination by said determining means that the key information does not exist in said service management means, for obtaining the key information corresponding to the content service identified by said service identifying information by transmitting the service identifying information included in said service-related information and said authentication information to the access destination indicated by said access destination information included in said service-related information through said communication means.

5. The content reproducing apparatus according to claim 4, wherein
said prescribed information further includes service access destination information indicating a service access destination to be accessed to receive the content service identified by said service identifying information;
said service-related information processing means further includes means for applying said service access destination information to said means for processing; and
said means for processing includes means for processing the content from the content providing server indicated by said service access destination information applied by said means for applying, using the key information obtained by said means for obtaining.

6. The content reproducing apparatus according to claim 3, wherein
said prescribed information further includes a key retrieving command string to be applied to said access destination when said key information is to be obtained; and
said means for obtaining key information includes means responsive to a determination by said determining means that the key information does not exist in said service management means, for receiving the key information corresponding to the content service identified by said service identifying information from said access destination by transmitting the service identifying information included in said service-related information and said key retrieving command string to the access destination indicated by said access destination information included in said service-related information through said communication means.

7. The content reproducing apparatus according to claim 2, wherein
said prescribed information includes key information required for processing the content provided by the content service identified by said service identifying information; and
said key information obtaining means includes means responsive to a determination by said means for determining that the key information does not exist in said service management means, for obtaining the key information included in said service-related information and applying the key information to said service management means.

8. The content reproducing apparatus according to claim 7, further comprising
means for managing validity period of the key information obtained by said key information obtaining means and for invalidating the key information in response to expiration of the validity period.

9. The content reproducing apparatus according to claim 1, wherein
said prescribed information includes auxiliary content related to the content provided by the content providing server identified by said service identifying information;
said content reproducing apparatus further comprising:
means responsive to reception by said service-related information processing means of said service-related information, for presenting said auxiliary content to a user; and
means for receiving a user instruction as to whether the content provided by said content providing server identified by said service identifying information is to be processed or not; wherein
said service-related information processing means includes means for controlling said content processing means such that in response to reception by said receiving means of an instruction from the user, the content identified by the service identifying information received by said service-related information processing means is processed using the service-related information received by said service-related information processing means.

10. The content reproducing apparatus according to claim 9, wherein
said presenting means includes means, responsive to reception of a plurality of pieces of service-related information related to said content service by said service-related information processing means, for successively presenting to the user auxiliary content included in each of said plurality of pieces of service-related information in accordance with a prescribed method of presentation,
means for receiving a selection instruction by the user selecting the content service corresponding to the auxiliary content presented by said successively presenting means, and
means for displaying the auxiliary content corresponding to the content service selected by said selection instruction.

11. The content reproducing apparatus according to any of claims 1 to 10, wherein
said content service includes a content service through broadcast via a plurality of channels; and
said content processing means includes
receiving means for receiving said broadcast, and
means for selecting and reproducing a broadcasting signal corresponding to the designated content service, from broadcasting signals received by said receiving means.

12. A computer program causing, when executed by a computer having a communication function and a content receiving function, the computer to operate as the content reproducing apparatus according to any of claims 1 to 11.

13. A computer readable recording medium recording the computer program according to claim 12.

14. A method of providing service-related information facilitating an access to a content service provided by a prescribed content providing server to a potential user of said content service, comprising the steps of:
obtaining service identifying information for identifying the content service from said prescribed content providing server; and
transmitting said service identifying information to a content reproducing apparatus related to said potential user through a network.

15. The method of providing service-related information according to claim 14, wherein
said obtaining step includes the step of obtaining said service identifying information and authentication information related to access permission for the content provided by the content service, from said prescribed content providing server; and
said transmitting step includes the step of transmitting said service identifying information and said authentication information to the content reproducing apparatus related to said potential user through the network.

16. The method of providing service-related information according to claim 14, wherein
said content service provides content that requires a prescribed key for reproduction;
said method further comprising the step of
obtaining key information required for reproducing the content provided by each content providing server from said prescribed content providing server; wherein
said transmitting step includes the step of transmitting, in addition to said service identifying information, the key information of the content provided by said content providing server identified by said service identifying information to the content reproducing apparatus related to said potential user through the network.

17. The method of providing service-related information according to claim 14, wherein
said content service is a broadcasting service for broadcasting scrambled content in accordance with a timetable prepared in advance; wherein
said obtaining step includes the step of obtaining, from said prescribed content providing server, service identifying information for identifying the content service, authentication information related to access permission to the content identified by the service identifying information, and schedule information representing broadcast schedule of the content provided by the content providing server; and
said transmitting step includes the step of transmitting, for each piece of service identifying information, said service identifying information and said authentication information at a timing determined by the broadcast schedule of the content identified by the service identifying information, to the content reproducing apparatus related to said potential user through the network.

18. The method of providing service-related information according to claim 14, wherein
said content service is a broadcasting service for broadcasting scrambled content in accordance with a timetable prepared in advance; said method further comprising the step of
collecting, for each said potential user, selection information necessary for selecting content; wherein
said obtaining step includes the step of obtaining, from said prescribed content providing server, service identifying information for identifying the content service, authentication information related to access permission to the content identified by the service identifying information, and attribute information representing content attribute attached to the content in advance; and
said transmitting step includes, for each said potential user and each piece of said service identifying information,
the step of selecting, from the content service identified by the service identifying information, content of which service related information is to be transmitted to the content reproducing apparatus related to the potential user, based on the selection information collected for the potential user and on the attribute information of the content, and
the step of transmitting, at a timing determined by broadcast schedule of the content, said service identifying information and said authentication information to the content reproducing apparatus related to the potential user through a network.

19. The method of providing service-related information according to claim 14, wherein
said content service is a broadcasting service for broadcasting scrambled content in accordance with a timetable prepared in advance;
said obtaining step includes the step of obtaining, from said prescribed content providing server, service identifying information for identifying the content service, authentication information related to access permission to the content identified by the service identifying information, schedule information indicating broadcast schedule of the content provided by the content service, and key information for descrambling content provided by the content service; and
said transmitting step includes the step of transmitting, for each piece of service identifying information, said service identifying information, said authentication information and said key information, at a timing determined by the broadcast schedule of the content of the content service identified by the service identifying information, to the content reproducing apparatus related to said potential user through the network.

20. The method of providing service-related information according to claim 14, wherein
said transmitting step includes the step of transmitting, in addition to said service identifying information, address information for accessing said content providing server, to the content reproducing apparatus related to said potential user through the network.

21. The method of providing service-related information according to claim 14, wherein
said transmitting step includes the step of transmitting, in addition to said service identifying information, address information for accessing an authentication server performing authentication related to access permission to the content service identified by the service identifying information, to the content reproducing apparatus related to said potential user through the network.

22. A computer program causing, when executed by a computer having a communication function, the computer to execute the method of providing service-related information according to any of claims 14 to 21.

23. A computer readable recording medium recording the computer program according to claim 22.

24. A service-related information providing apparatus for providing service-related information of services made available by prescribed key information, comprising:
authentication information storing means for storing authentication information for authentication of an external apparatus;
first transmitting means responsive to a request from a first external apparatus for service-related information related to the service provided by said service-related information providing apparatus, for authenticating the first external apparatus using the authentication information stored in said authentication information storing means, and for transmitting the service-related information to said external apparatus only when the first external apparatus is authenticated; and
second transmitting means responsive to a request from a second external apparatus for key information designating any of said services, for transmitting the designated key information to said second external apparatus; wherein
said request for the key information includes authentication information for obtaining key information for using any of said services; and
said second transmitting means includes key transmitting means for authenticating whether the request for key information was made based on the service-related information transmitted by said first transmitting means or not, using the authentication information included in said key information request, and for transmitting, for the authenticated key information request, the key information requested by the key information request to the second external apparatus that transmitted the request.

25. The service-related information providing apparatus according to claim 24, wherein
said first transmitting means includes
means responsive to a request from said first external apparatus for the service-related information related to the service provided by said service-related information providing apparatus and for key information for using the service, for authenticating the first external apparatus using the authentication information stored in said authentication information storing means, and
means for transmitting, to said first external apparatus authenticated by said authentication means, the service-related information related to the service requested by said first external apparatus and key information with validity period for using the service.

26. The service-related information providing apparatus according to claim 25, wherein
said request for key information further includes apparatus identifying information of said second external apparatus; and
said transmitting means includes
authentication means for authenticating whether a request for key information was made based on the service-related information transmitted by the first transmitting unit or not, using the authentication information included in the request for key information,
registering means for registering said apparatus identifying information and service identifying information designated by said request for key information authenticated by said authentication means associated with each other, and
means for transmitting, to the apparatus identified by the identifying information registered in said registering means, the key information for using the service identified by the corresponding service identifying information registered in said registering means.

27. The service-related information providing apparatus according to claim 24, wherein
said key transmitting means includes
authentication means for authenticating whether a request for key information was made based on the service-related information transmitted by the first transmitting means or not, using the authentication information included in the request for key information, and
means for transmitting, in response to the key information request authenticated by the authentication means, the key information requested by the key information request with validity period, to said second external apparatus that transmitted the request.

28. The service-related information providing apparatus according to any of claims 24 to 27, further comprising
service providing means for providing said service made available by using said prescribed key information.

29. A service providing system, comprising:
a service related information providing apparatus responsive to a request from an external apparatus for service-related information, for transmitting the requested service-related information to the external apparatus;
a service information transmitting apparatus for requesting said service-related information providing apparatus for said service-related information, and based on the service-related information transmitted in response from said service-related information providing apparatus, transmitting, to a prescribed apparatus, notice information including service specifying information specifying a prescribed service and service utilizing information necessary for using the service specifying information; and
a service using apparatus responsive to the notice information, for accessing the service specified by the service specifying information included in the notice information and using the service using said service utilizing information included in said notice information.

30. The service providing system according to claim 29, wherein
said service-related information providing apparatus includes means responsive to a request from an external apparatus for the service-related information, for transmitting to the external apparatus the requested service-related information and key information required for using a service related to the service-related information;
said service information transmitting apparatus includes means for requesting said service-related information providing apparatus for said service-related information, and based on the service-related information transmitted in response from said service-related information providing apparatus and on said key information, transmitting to a prescribed apparatus notice information including service specifying information specifying a prescribed service and the key information required for using the service specified by the service specifying information; and
said service using apparatus includes means responsive to said notice information for accessing the service specified by the service specifying information included in the notice information, and using the service utilizing said key information included in said notice information.

31. The service providing system according to claim 29, wherein
said notice information transmitting apparatus includes means for requesting said service-related information providing apparatus for said service-related information, and based on the service-related information transmitted in response from said service-related information providing apparatus, transmitting to a prescribed apparatus notice information including service specifying information specifying a prescribed service and key obtaining information for obtaining the key information required for using the service specifying information; and
said service using apparatus includes means responsive to said notice information for obtaining the key information based on said key obtaining information included in said notice information, accessing the service specified by the service specifying information and using the service utilizing said key information.
